# EUROPEAN PATENT SPECIFICATION

(11) **EP 2 548 331 B1**
(45) Date of publication and mention of the grant of the patent: **26.11.2014**
(21) Application number: 11708480.6
(22) Date of filing: 16.03.2011
(51) Int. Cl.: H04L 9/32, H04L 9/08

(54) **System and method for communicating between different entities using different data portions for different channels**
System und Verfahren zur Kommunikation zwischen verschiedenen Einheiten unter Verwendung unterschiedlicher Datenabschnitte für unterschiedliche Kanäle
Système et procédé pour la communication entre différentes entités en utilisant différentes parties de données pour différents canaux

(30) Priority: 29.10.2010 US 408056 P; 19.03.2010 US 315616 P
(43) Date of publication of application: 23.01.2013
(73) Proprietor: MR.QR10 GmbH & Co. KG, 24941 Flensburg (DE)
(72) Inventor: PALZER, Martin, 65385 Rüdesheim am Rhein (DE); STALS, Luc, 40629 Düsseldorf (DE); GELDERMANN, Martin, 63589 Linsengericht (DE); HIRASAWA, Shinji, Aichi-ken 448-0852 (JP)
(74) Representative: Zimmermann, Tankred Klaus
(86) International application number: PCT/EP2011/054001
(87) International publication number: WO 2011/113874

(56) References cited:
- WO-A2-2008/127309
- JP-A- 2005 064 984
- Menezes, Vanstone, Oorschot: "Handbook of Applied Cryptography", 1997, CRC Press LLC, USA, XP002660067, page 492 - page 493 page 546 - page 556

## Description

Nowadays data transfer suffers from security breaches like phishing, man-in-the-middle attacks, password stealing etc. The following patent application describes a way to secure data transmissions via multiple way data transfer. There are several advantages in this patent application, first of all the two independent ways transmission is really difficult to attack. Second if we are using auto-id technologies like a 2D code then an attacker has no chance to figure out how and via which way the second (or maybe multiple) entity is sending the other data because on the first entity there is no information about the second entity known. Additional options for this two way communication are the splitting of the encrypted file, the splitting of the encryption key or even both depending on the application and the security needs.

WO 2009/144010 A1 discloses a server device for controlling a transaction, a first entity and a second entity. The first entity can be, but not limited to, a POS an online shop or even a car to start the engine. The second entity can be a user having a mobile phone with a digital camera, and the third entity is the server. The first entity generates a code having a transaction information and sends a first message to a server. The second entity, such as a buyer of a product or a user of a service captures the code and transmits a second message to the server having information on the transaction extracted from the code. The transaction is only authorized when the server has determined that the first message and the second message match with each other. The transaction can be a payment transfer, a grant of access to a service or a grant of an access to an internet portal.

Document JP2005064984 discloses a first entity for communicating with other communication entities comprising a data subdivider for subdividing a data entity into different data portions, an output interface for transmitting messages comprising a different data portion to each of the communication entities and information on how the data entity has been subdivided.

The invention is defined in the independent claims. Particular embodiments are set out in the dependent claims.

The present invention is based on the finding that an improvement with respect to security and/or efficiency can be obtained when the messages sent from the first entity and the second entity to the server does not comprise the same transaction data, which are then matched by the third entity/server in that they are identical to each other or not. Instead, the data sent from the first entity to the server is different from the data sent from the second or more entities to the server, but both of these two or more data blocks or data portions belong to the same data entity. The data entity may comprise a file, which can be encrypted or non-encrypted, or a key. This data entity is subdivided in the first entity into different data portions, and an output interface in the first entity transmits a message having the first portion, but not having the second (or more) portion(s) to the third (or more) entity. Furthermore, the first entity generates a second message which comprises the second (or more) data portion, but does not comprise the first data portion and provides this second (or more) message(s) for a reception by a second entity. Specifically, the data subdivider is configured for subdividing the data entity in a manner known to the third entity. Alternatively, the data subdivider is configured for generating subdivision information indicating the way of subdividing the data entity, and this subdivision information is included into the first message or the second message as a side information or is sent to the third entity as a separate message.

Based on this information, the third entity such as a server can (re)assemble the data portions received from the first entity and the second entity in order to process the whole data entity after reassembling.

Preferably, the transmission channels for transmitting the first message and the second message are different from each other, where typically the first transmission channel for transmitting the first message will be a high capacity transmission channel such as an internet channel, a wired channel or a mobile phone channel. The second channel, however, can be a low capacity channel which is preferably a one-way channel such as a channel made up by displaying the data on the display and capturing a displayed data by the second entity.

A preferred way to do that is to display the second message as a QR code or any other two-dimensional code on a display or via any auto-id technology for example RFID or NFC. Then, the second entity will have a digital camera and a QR code reader or any other reader for reading the two-dimensional or auto-id code in order to extract the information from the second message. Alternatively any other auto-id technology like NFC or RFID might be implemented.

In contrast to the transmission of the same data over the two or more transmission channels, the efficiency of the inventive process is enhanced due to the fact that only e.g. 50% of the data is transmitted via the channels compared to a system which transmits the same data over both channels.

Furthermore, the inventive concept is flexible in that the data portions can be dimensioned differently so that a large data portion is transmitted in the message for the broadband channel and a small data portion is transmitted via the channel with the smaller data capacity. Specifically, the data capacity of a channel formed by a two-dimensional code is quite low. On the other hand, this channel is very attractive in that it is easily and efficiently adaptable for mobile phone applications, i.e. where the second entity is a mobile phone application.

Furthermore, the security of the process is enhanced as well due to the fact that no channel exists over which the complete data entity is transmitted. Stated differently, in the system which transmits the same data over both channels, an attacker may attack only one channel and will have the complete data. In accordance with the present invention, however, attacking of a single channel will not result in the complete data entity, but will only result in the data portion which is typically useless for an attacker. Therefore, the security is enhanced due to the fact that an attacker would have to attack both channels in order to retrieve the first data portion and the second portion. However, even these data portions will not be sufficient for fully attacking such a system due to the fact that the attacker does not know how to assemble the data portions to retrieve the data entity. Therefore, the attacker has to gain further information on the assembling of the data in order to be able fully attack the inventive system.

Preferably, the data entity is generated by encrypting transmission data. Then, even extracting only several bytes from the encrypted data for the low capacity channel and leaving the overwhelming majority of the data in the first message transmitted over the high capacity channel will nevertheless result in the positive outcome that even if the overwhelming majority of the encrypted data is attacked by an attacker, this data is useless due to the fact that the separation into different data portions has been performed in the encrypted domain rather than in the non-encrypted domain.Needless to say that the minority of the data in the second message is useless for retrieving the data in the data entity.

Preferred embodiments of the present invention are subsequently described with respect to the accompanying drawings:
- Fig. 1a: is a sequence of steps performed by the first entity, the second entity or the server in a preferred embodiment;
- Fig. 1b: is an additional sequence of steps performed between the server and a payment company in case of a positive matching of both messages;
- Fig. 2: is a block diagram of a preferred embodiment of the first entity such as an POS;
- Fig. 3a: is a block diagram of a preferred implementation of the server;
- Fig. 3b: is a sequence of steps performed by the server for performing an additional optional security check based on information such as the mobile service device number (MSISDN/IMSI)and/or IMSI;
- Fig. 4a: is a block diagram of a preferred implementation of the second entity such as a mobile phone with a digital camera;
- Fig. 4b: is a sequence of steps performed by the second entity including requesting of a secret from the user;
- Fig. 5: is a table illustrating six different exemplary applications of the inventive concept;
- Fig. 6: illustrates a communication scenario between the three entities in accordance with an embodiment identifying different transmission channels;
- Fig. 7: illustrates a further embodiment of a transmission scenario between the three entities with a key generated by the first entity;
- Fig. 8: illustrates a further implementation of the concept in Fig. 7, but with the usage of a further key K1 between the first entity and the third entity;
- Fig. 9: illustrates a further embodiment where the matching in the third entity is performed with data from multiple entities such as a fourth or even more entities;
- Fig. 10: illustrates an embodiment, in which the data entity is a data file encrypted by an encryption algorithm by using key information allowing a secure communication between the first entity and the third entity;
- Fig. 11: illustrates a further implementation, in which the data entity is a key separated into two different key portions;
- Fig. 12: illustrates a general topology in a mobile phone/web shop application with a matching server;
- Fig. 13: illustrates implementation details of the concept of Fig. 12;
- Fig. 14: illustrates further details regarding the distribution of operations between a mobile part and a server part and between the first entity (POS/web shop) and the second entity (mobile phone);
- Fig. 15: illustrates some details of the concept of Fig. 14;
- Fig. 16: illustrates an embodiment, in which the data entity is an encrypted file;
- Fig .17: illustrates further details related to the concept of Fig. 16;
- Fig. 18: illustrates a block diagram of a first entity in a preferred implementation;
- Fig. 19: illustrates a block diagram of a third entity in accordance with a preferred implementation; and
- Fig. 20: illustrates a block diagram of a second entity in accordance with a preferred implementation.

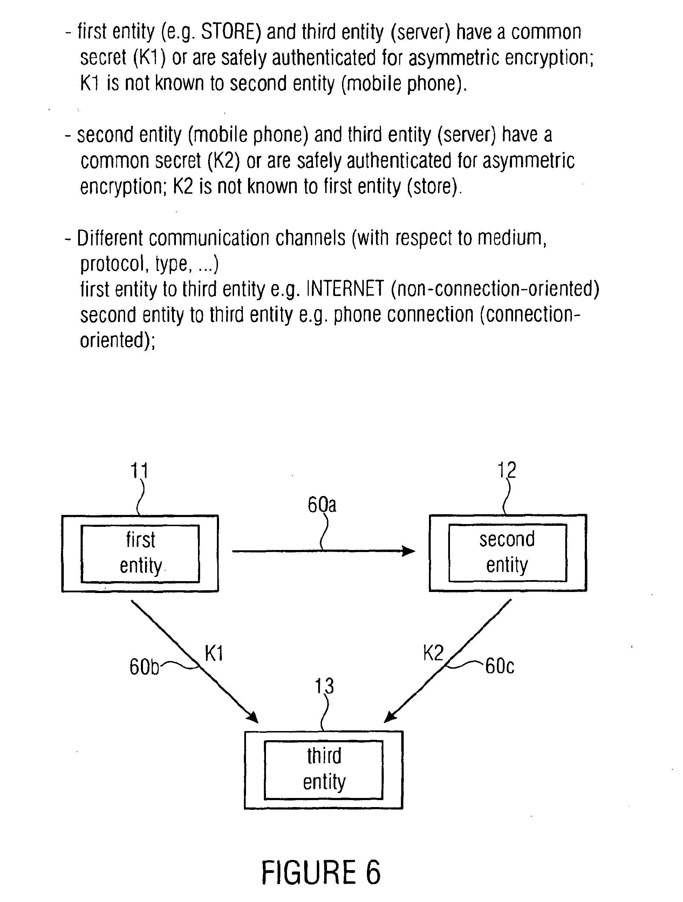

Fig. 6 illustrates an overview between a first entity 11, a second entity 12 and a third entity 13. Specifically, there are three communication channels 60a, 60b, 60c between the different entities, where the transmission channel 60b extends between the first entity 11 and the third entity 13 and may comprise a high capacity transmission channel.

Furthermore, the transmission over this transmission channel 60b may be an encrypted communication where the key information used for this communication is illustrated as K1. When a symmetric encryption is applied, the key information as used throughout this specification can be a symmetric key only known to the first entity and the third entity so that these two entities can use this secret key K1 for encryption and decryption. However, the key information as used throughout this specification may also comprise an asymmetric encryption, where a key pair exists for each entity. This key pair comprises a public key known to everybody and a private key only known to the specific entity and not known to any other entity. Then, the first entity would encrypt the data intended for the third entity using the public key of the third entity, and the third entity could decrypt this data using its own private key. The transmission channel between the first entity and the second entity indicated as 60a is preferably a very low capacity channel such as a QR code channel, a near field communication channel or any other comparable channel. Finally the third channel 60c is preferably a mobile phone channel, since the second entity to it is preferably implemented as a mobile phone.

Optionally, the second entity and the third entity also share key information such as a symmetric key K2 or, again, the key information necessary for asymmetric encryption such as a key pair comprising a public key known to everybody and a private key only known to the respective entity. If no encryption (k2) is used the implementation of a secure channel like https between second and third entity is preferred.

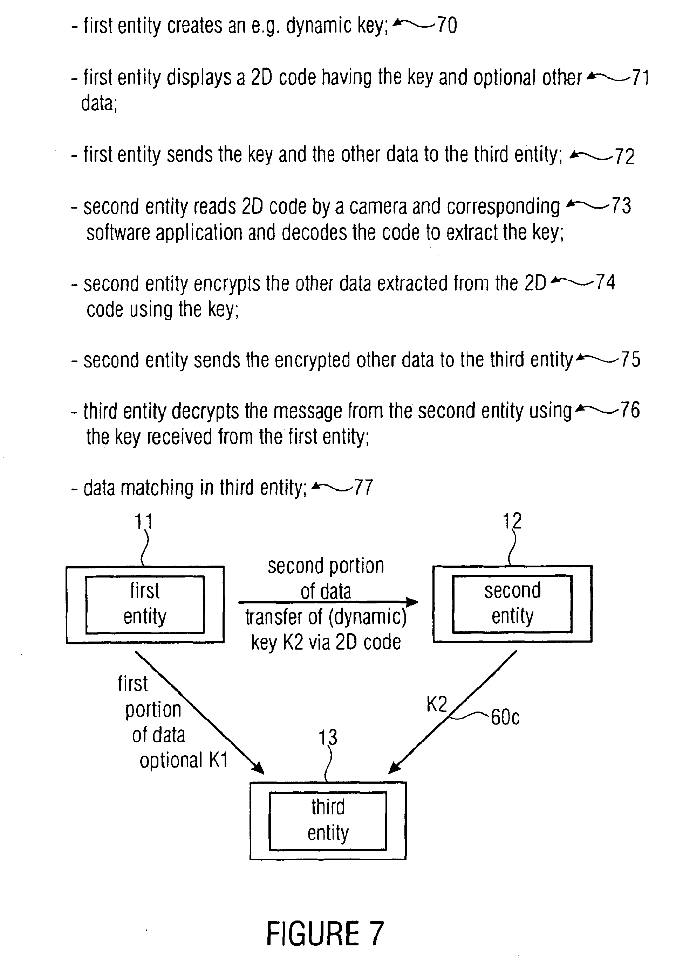

Fig. 7 illustrates a further implementation of the concept of Fig. 6, where the encryption using the key information K2 is further elaborated. Particularly, the first key is a key created in the first entity such as a dynamic key as illustrated at 70. In a step 71, the first entity 11 displays a two-dimensional code having the key (K2) and additional data, and particularly the second portion of data of a data entity is indicated at 71. Furthermore, the first entity sends the key K2 and other data, and specifically the first portion of the data to the third entity 13 as indicated at 72. In a step 73, the second entity 12 reads the two-dimensional code using a camera and the corresponding software application and decodes the two-dimensional code to extract the key K2 as illustrated at 73. The second entity 12 then encrypts the second data portion which has been extracted from the two-dimensional code using this key K2. Then the second entity sends the encrypted second data portion to the third entity via the transmission channel 60c as indicated at 75. In step 76, the third entity decrypts the message from the second entity using the key K2 received from the first entity. Then, a data matching using the first portion of data from the first entity 11 and using the second portion of data from the second entity 12 takes place in the third entity 13 as illustrated at 77. If no encryption is used the implementation of a secure channel like https between second and third entity is preferred.

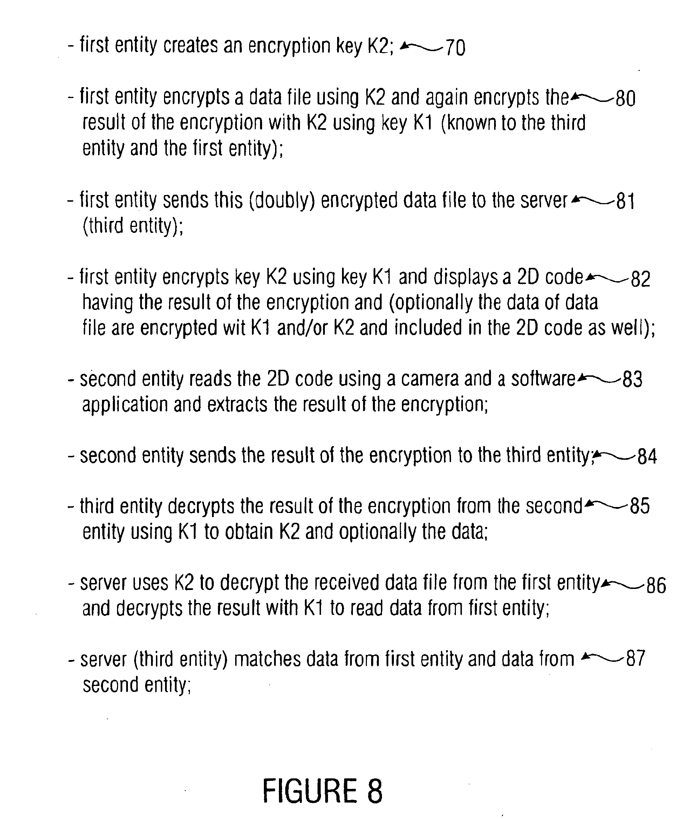

Fig. 8 illustrates a further implementation of the concept in Fig. 7, but now with a second key information indicated in Fig. 7 as K1. After having created the encryption key K2 by the first entity in step 70, the first entity encrypts the data portion (the first data portion) intended for the third entity using this key K2 and again encrypts the result of the encryption with K2 using key information K1 which is known to the third entity and the first entity in the case of a symmetric encryption algorithm, or using the corresponding public key in the case of an asymmetric encryption indicated at 80. The first entity then sends this doubly encrypted data portion to the server indicated at 81. Additionally, the first entity encrypts the key K2 using the key K1 and displays a two-dimensional code having the result of the encryption and additionally having the second data portion. However, the second data portion will now be encrypted with K1 and/or K2. This is indicated in step 82. Then, the second entity 12 reads the two-dimensional code using a camera and the software application, and then extracts the result of the encryption as indicated at 83. The second entity then sends the result of the encryption to the third entity indicated at 84 in Fig. 8 and the third entity decrypts (85) the result of the encryption from the second entity using K1 to obtain K2 and the second data portion. In step 86 the server uses K2 to decrypt the received data file, i.e. the first data portion from the first entity, and decrypts the result from K1 to read the first data portion. Then, in step 87, the server matches the data from the first entity and the data from the second entity where this matching comprises an assembling of the two different data portions as will be discussed later on. If no encryption is used the implementation of a secure channel like https between second and third entity is preferred.

The first entity creates a dynamic encryption key and transfers this dynamic key for example via a 2D code to the second entity. The second entity takes the key and encrypts the data extracted from the code with this key (option: encrypted). In parallel the first entity sends the encryption key (option: encrypted) to the third entity. The third entity decrypts the (optionally double) encrypted data and continues with the operation for example data matching or data transfer. (Fig. 7)

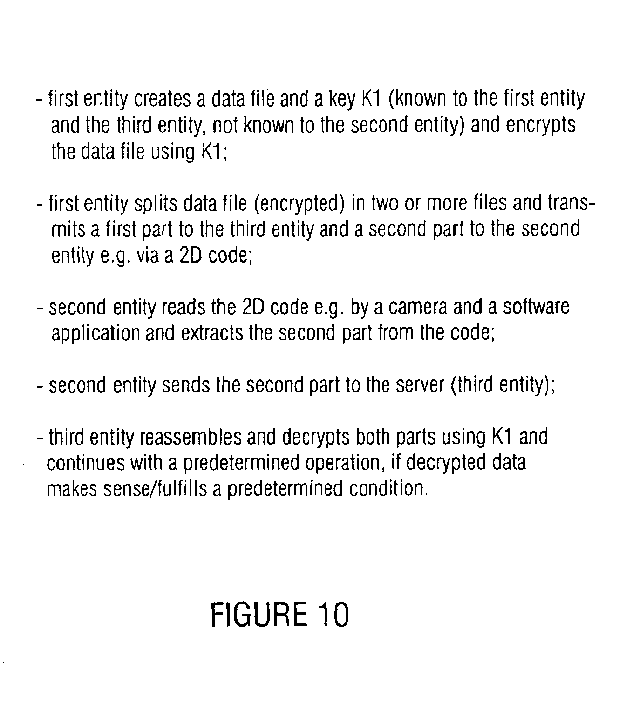

Option: The transmission of the encryption key might be encrypted as well
1) The first entity creates an encryption key and encrypts a data file for the first time and encrypts this file again with a key already known by the third entity and sends this data file to the server. The first entity encrypts the dynamic encryption key with the encryption key already known by the server and hand it over to the second entity for example but not limited to , with a 2D code. The second entity transfers the encrypted encryption key to the server. Only with both files the server is able to decrypt the data file. (Fig. 8)
2) The first entity creates a data file and encrypts the file with a given key (this key might be renewed for every new data transfer). After the encryption the first entity splits the encrypted data in two or more files and sends one part of the file(s) to the third or more entities and the other part to the second entity via any known or future transfer technology like TCP/IP, 1D or 2D codes etc. The second entity takes the data and sends it also to the third entity. The third entity reassembles the received parts, decrypts the data and continue with the pre defined operation like data matching, data transfer, data validation etc. (Fig. 10)

Option: The first entity who splits the encrypted data file adds to the data sent to the third entity the order of the packets sent to the second entity and adds the order of the packets sent to the second entity to the data sent to the third entity to reassemble the sent data in the right direction

Option 2: The encryption key is split and sent via two ways to the third entity. Option 3: The split encryption key is again encrypted (double encryption).

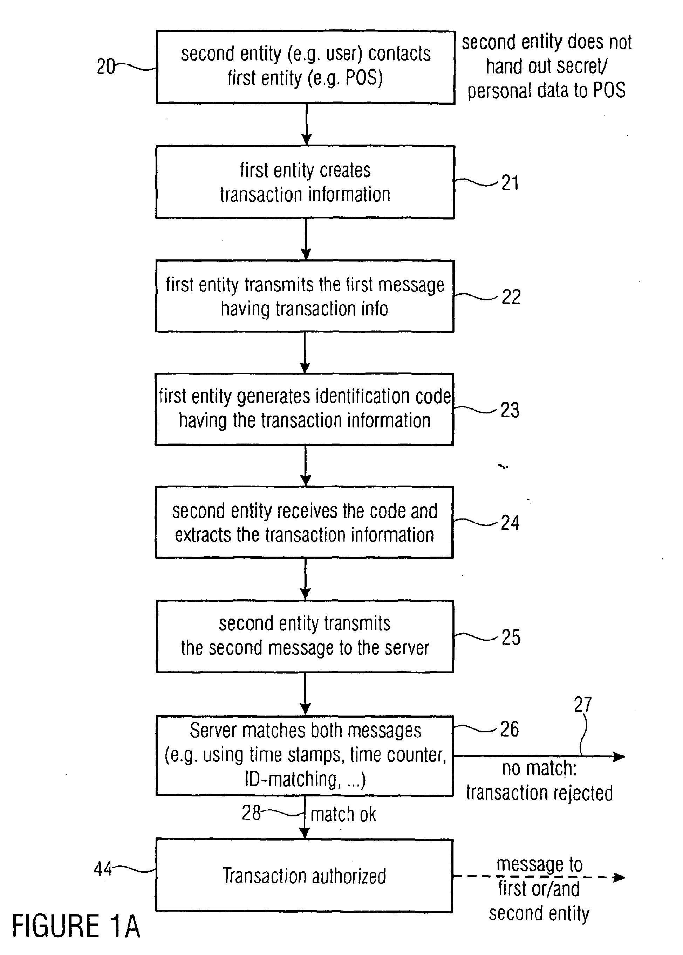

These three entities perform a specific communication in order to implement a secure transaction. Subsequently, a sequence of messages in accordance with a preferred embodiment is described in the context of Fig. 1a. In a first step 20, the second entity contacts the first entity. This step may, for example, be a straightforward message to the first entity which can, for example, be a point of sale, and the user states that the user is interested to buy a product or to have a service. Importantly, this step does not require that the second entity hands out any secret or personal data to the POS. This first "triggering" step 20 even does not require that the second entity hands out her or his name or identification.

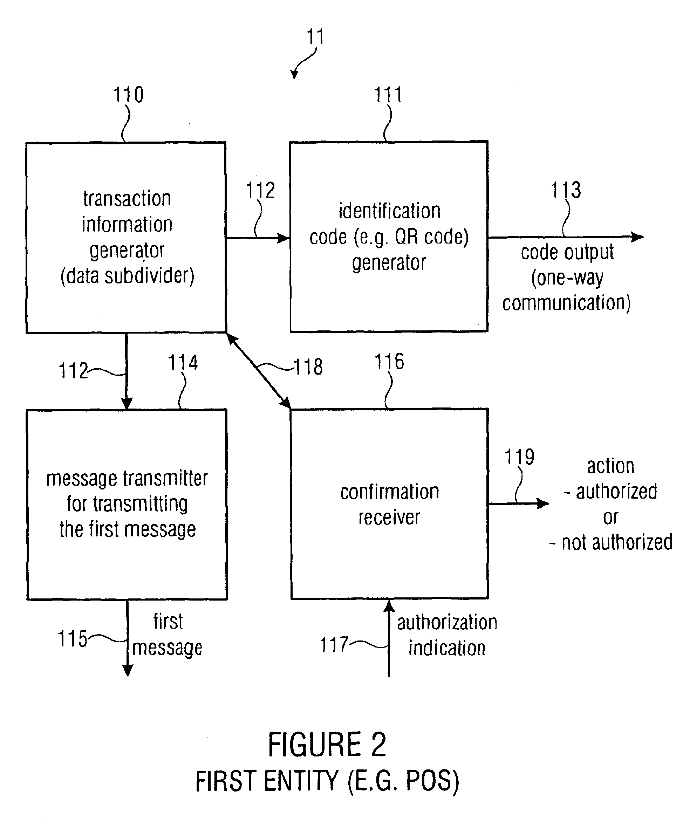

In response to step 20, the first entity creates transaction information as indicated at 21. This transaction information can include any kind of information identifying a transaction which finally has to be performed. The transaction information can be a transaction identification, a description of the second entity and/or the first entity, a description of the product or service in question, a description of the price in question, time stamps etc. Subsequent to generating the transaction information in step 21, the first entity transmits the first message having the transaction information to the server as indicated at step 22. Furthermore, the first entity generates an identification code having the transaction information as indicated at 23. Alternatively, the first entity can also encrypt a file, split the file and transmit via different transmission media such as internet, telephone, DSL or mobile transmission such as GSM, UMTS etc. (although not explicitly illustrated in Fig. 2). Hence, the entity 111 in Fig. 2 can also output a split file or even a split key as outlined later on.

It is to be noted that step 22 of Fig. 1a may comprise a data subdivision performed in the first entity in order to subdivide the data entity, i.e. the full set of transaction information into a first data portion to be introduced into the first message and into a second data portion to be introduced into a second message mentioned, for example, in step 25 of Fig. 1A.

The order of steps 22 and 23 can be reversed and there can be a certain time distance between generating the identification code and transmitting the first message to the server so that the transmission of the first message to the server takes place a certain time subsequent to the generation of the identification code. Furthermore, the transmission of the first message to the server can depend on a further condition so that the first entity receives knowledge whether the second entity actually has transmitted a message to the server or whether the second entity although triggering the first entity in step 20 has stopped the whole procedure due to a lack of interest into the offered product or service.

In step 24, the second entity receives the code from the first entity via a preferred one-way communication and extracts the transaction information from the code. Preferably, step 24 is implemented by taking a photograph of the identification code generated and displayed by the first entity. Alternatively, however, the identification code can also be an RF transmission using for example a near field communication technology or can be an audio transmission in the audible or inaudible range from the POS to the user. This transmission can also be the transmission of an email or even the handing out of a piece of paper on which the identification code is printed and which the user can then analyze via a digital camera or a scanner.

Subsequent to the extraction of the transaction information from the identification code in step 24, the second entity transmits a second message to the server as indicated at 25, where the second message transmitted to the server comprises the transaction information and, preferably additional information as will be discussed later on. In step 26, the server matches both messages such as by using time stamps, a time counter, an ID matching or any other way of validating two messages in order to check, whether these messages or information contained in these messages have a predetermined relation to each other. When step 26 results in a negative outcome, i.e., when the check has revealed that the information in the two messages do not have a predetermined relation to each other or only one of the two messages has arrived the server, a no match result is output at 27. The action taken in response to a no match result can be any of actually transmitting a transaction rejected message to the first entity and/or the second entity or simply interrupting the further procedure without providing any further indication or can even be an information to the police or similar authorities in case of a suspected criminal abuse.

The matching of the server performed in step 26 of Fig. 1A comprises, in an inventive embodiment, the reassembling of the different data portions received by the server from the different entities and the further processing of the reassembled data. One further processing may, for example, be a decryption when the data entity has encrypted data, and a positive matching result will occur, when the encrypted data was correct, since only then a decryption will result in a useful outcome. Further processing may be a reading of a data file when the data entity is non-encrypted. Then, the reading of the data file will only result in a useful content when the data portions match with each other, i.e. together form the reassembled data entity. A further processing may be the usage of the data entity as a key for decryption, and the decryption will only result in the useful outcome, when the key, i.e. the data entity, has been correctly reassembled using correct data portions in a correct order.

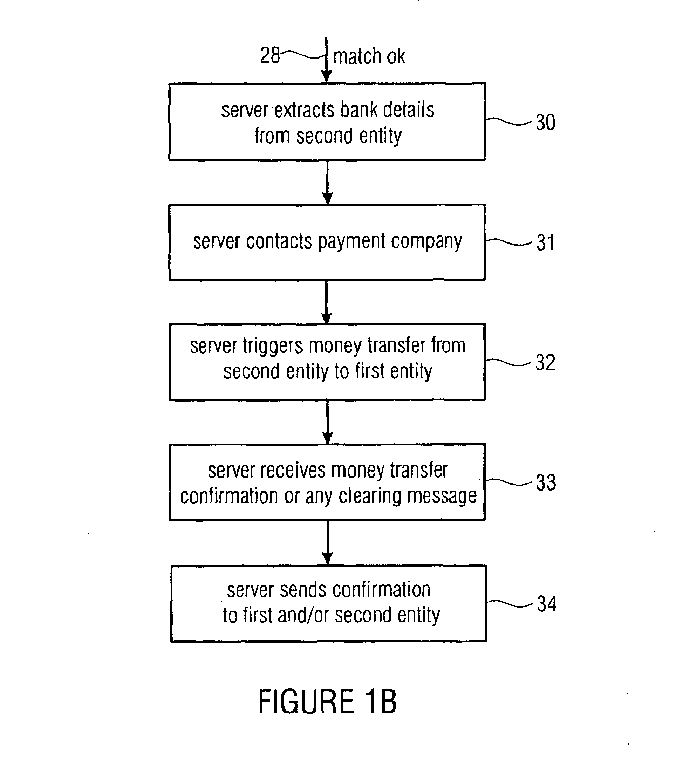

When, however, step 26 has resulted in a positive outcome, i.e., a match OK result 28, the transaction identified by the transaction information is authorized in step 44. Step 44 can result in an actual message to the first and/or the second entity that the transaction is authorized, but can, alternatively or additionally result in a further communication scenario as, for example, illustrated in Fig. 1b. Subsequent to a match OK result, the server may extract or get from a database bank details of the second entity in step 30 either from a server-stored database or the second message from the second entity or an additional message received from the second entity. The bank details such as account information should not be included in the transaction data. Typically, the bank details will not be known to the first entity. Hence, the bank data are placed on a server and are retrieved from a local data base or from a second server based on the user information. Depending on the bank details extracted, the server may contact a payment company in step 31, and the server may trigger a money transfer from the second entity to the first entity in step 32. In case of a positive outcome of step 32, the server receives money transfer confirmation or any other clearing message indicating that a money transfer can be definitely expected. Subsequent to the reception of such a confirmation or clearing message in step 33, the server can send a confirmation to the first and/or the second entity in step 34 that everything was OK, and the money transfer transaction has successfully been completed. Then, based on this message received from the server subsequent to step 34, the first entity can finally handout the product or allow an access to a service or can perform any other action which has been paid by the money transfer triggered by the server in step 32.

Correspondences between the steps in Fig. 1a and Fig. 1b and Fig. 7a have been indicated. A specific implementation of step 22 is the first message where the selling party requests the buying party to pay. A specific implementation of step 24 is that a data transfer of an auto ID code takes place without any link between both parties such as via a one-way communication and, preferably via an optical capture with the camera from the second entity 12. A preferred implementation of step 25 is a message from the buying party to the server device that the buying party sends a payment request to pay the selling party. A preferred implementation of an action in reply to the transaction authorized step 29 or the confirmation sending action 34 in Fig. 1b is that an information of the payment company to the selling party takes place that the payment is accepted or, in the other case, rejected. When the payment/authentication request is accepted, the selling party will hand out the product or accept authentication and when the payment is rejected, the selling party will not handout the product or reject the authentication.

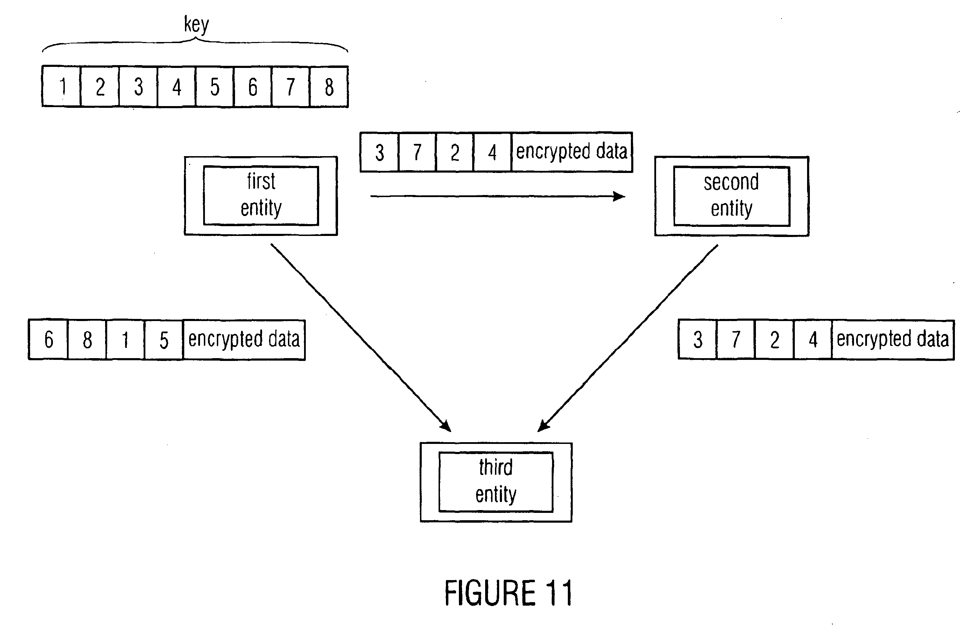

Fig. 2 illustrates a block diagram of a first entity 11 which can, for example, be a POS or an online portal 11 as indicated in Fig. 11 or can be an online server as indicated in Fig. 10. The first entity 11 for performing a transaction with a second entity 12 under control of a server device 13 preferably comprises a transaction information generator 110 for generating information on the transaction. Furthermore, an identification code generator 111 is provided, which receives the generated transaction information 112 and generates a code 113 which is output via preferably one-way communication. The code 113 may be a QR code or any other auto identification code or method, where any appearance of the code such as visual, via an audio transmission or via an RF transmission can be implemented. The first entity furthermore comprises a message transmitter 114 for transmitting a first message 115 to the server, where the first message 115 comprises the information 112 on the transaction. Furthermore, the first entity 11 comprises a confirmation receiver 116 for receiving, from the server, an authorization indication 117. Based on the received authorization indication 117, the confirmation receiver will double check, whether the authorization indication belongs to a certain transaction information as indicated by a connecting channel 118, and the confirmation receiver will than finally authorize an action or not. An authorized action may, for example, be the handing out of a product or the allowing of an access to a service or a different operation. The action authorized by the confirmation receiver does not necessarily have to be the transaction where the transaction information was generated by the transaction information generator. When the transaction is a payment transfer, then the conformation receiver will not authorize this transaction since this transaction is to be authorized by the server. When, however, the transaction is an access to an online service or online portal as discussed in connection with Fig. 10 or Fig. 11, then the action authorized by the confirmation receiver 116 will in fact be the transaction identified in the transaction information 112. The transaction information generator 110 preferably comprises the data subdivider for dividing the transaction information into different data portions, where the first data portion is provided to the message transmitter 114 for transmitting the first message, and where the second data portion is provided to the identification code generator 111 so that this data portion can be output via a one-way communication. It is to be noted that the data portion output via block 111 does not comprise the data portion output via block 114 and vice versa, so that the first message and the second message comprise different data in order to obtain a communication concept having an enhanced security on the one hand and having a better efficiency on the other hand, and furthermore being flexible specifically with respect to the separation of the data entity into the different data portions and the sizing of the data portions.

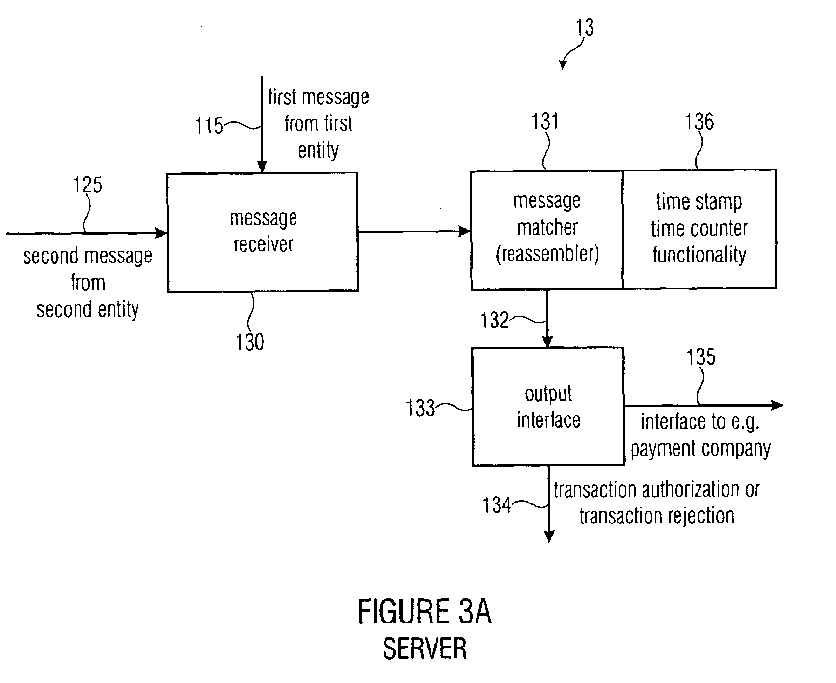

Fig. 3a illustrates a preferred implementation of a server device 13 for controlling a transaction between a first entity 11 and a second entity 12. The server device preferably comprises a message receiver 130 for receiving the first message 115 from the first entity 11 where the first message 150 comprises information related to a transaction, i.e., preferably the transaction information 112 generated by the transaction information generator of Fig. 2.

The receiver 130 furthermore receives the second message 125 from the second entity 12, where the second message furthermore comprises transaction information which is related to the transaction. Furthermore, the server 13 comprises a matcher 131 for checking whether the first information in the first message 115 and the second information in the second message 125 have a predetermined relation to each other. The result of 132 of this checking operation performed in the message matcher 131 is forwarded to an output interface 133 for authorizing the transaction, when the first information and the second information have a predetermined relation to each other and for rejecting the transaction when the first information and the second information do not have a predetermined relation to each other. The authorization or rejection can be performed via the transmission of messages over an authorization/rejection channel 134. Alternatively or additionally, an interface 135 to, for example, a payment company or any other further entity can be activated in order to perform further steps for completing a transaction. Typically, interface 135 will only be activated in case of a positive result 132, generated by the message matcher 131.

The message matcher 131 comprises, in accordance with an embodiment of the present invention, a data assembler or data re-assembler for assembling the first portion and the second portion to obtain the data entity using a predefined assembly rule or using assembling information received from the first entity. Further details on the re-assembler or assembler are discussed with respect to later figures.

Preferably, the message matcher 131 will have a time stamp, a time counter or any other time-related functionality 136, in order to perform a certain way of message matching. Preferably, both messages, i.e., the first message 115 and the second message 125 comprise a transaction identification. Furthermore, both messages may comprise an identification of the first entity, but do not necessarily have to comprise an identification of the second entity. Based on the transaction identification and/or the identification of the first entity or based on a certain identification of a product or a service which is e.g. a product ID or a product price, the message matcher will search for received messages having such related information.

Furthermore, it is preferred that an additional time feature is implemented which makes sure that only messages are accepted as matching messages when these messages were received by the server within a certain time period. In this case, the receiver would add a time stamp to a received message indicating the actually received time and the message matcher would be operative to only determine a match, when the time difference between the reception time instance of the two messages is less than a certain time period, such as one hour or preferably 30 minutes or even more preferably 5 minutes.

Alternatively, the message transmitter in the first entity and the message transmitter in the second entity will add a time stamp indicating the actual transmission time and the message matcher will evaluate a time difference between these time stamps which, for a positive match, should be lower than a predetermined time period, such as 60 minutes and preferably 30 minutes or even more preferably, 5 minutes.

Alternatively, the identification code may actually comprise a time stamp which is extracted by the second entity and which is transmitted by the second entity to the server where a reception time of this message can be compared to the generation time of the output code, in order to only come to a positive match when the time difference between those time instances is less than the predetermined amount. Therefore, in general, the time functionality 136 of the message matcher will be operative to evaluate the time difference between two events related to the generation of the identification code and/or the transmission of the first message with respect to a transmission and/or reception of the second message.

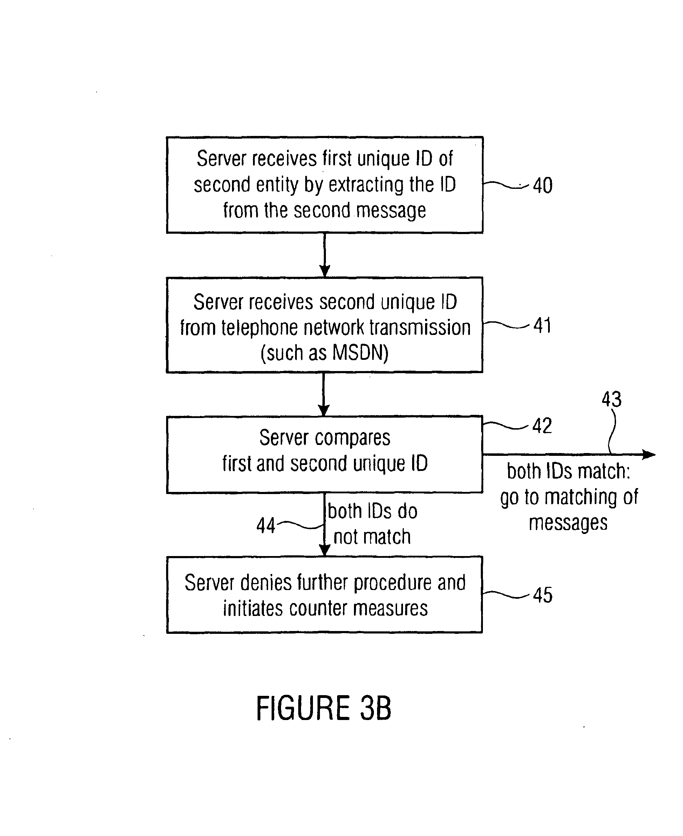

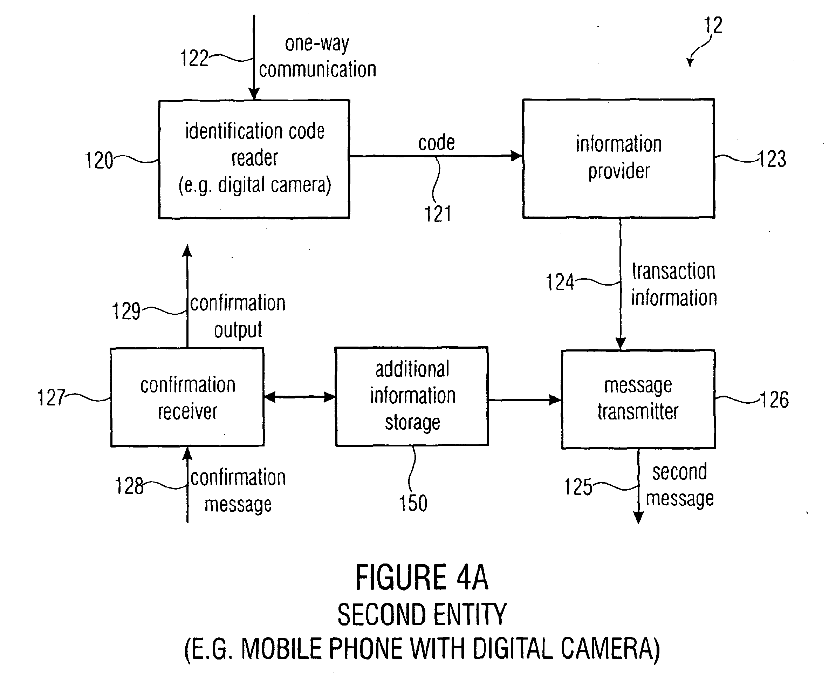

Preferably, the application running in a mobile device implementing the second entity as discussed with respect to Fig. 4a will be implemented to add to the second message the mobile service device number like IMEI or MSISDN, IMSI or GPS Data for which the application has been registered. The mobile service device number is a combination of the personal identification number including the SIM card and a serial number of the mobile phone. Therefore, when a SIM card is input into a different mobile phone compared to the mobile phone for which the IMEI or MSISDN or IMSI was registered, an IMEI or MSISDN or IMSI transmitted via a second message will be different from an IMEI or MSISDN or IMSI which is transmitted together with the second message due to the transmission protocol of the communication network. Typically, each communication, be it an actual telephone call or an SMS communication includes this IMEI or MSISDN or IMSI actually taken from the SIM card and the mobile phone serial number. Also this information might be retrieved directly from the Mobile Phone Operator Network. Therefore, as indicated in Fig. 3b, the server will receive, in step 40, a first unit number of the second entity by extracting the ID from the second message. This can be an IMEI or MSISDN or IMSI as fixedly programmed into the application running on the mobile device, for which the whole payment software was registered. The use of GPS data is also possible to create an area of usage around a device like an ATM, around a PC or a car. Also GPS fences for special areas like around a town, a county, or a country etc is possible.

Furthermore, the server receives a second unique ID from the telephone network transmission, which can also be an IMEI or MSISDN or IMSI, as indicated in step 41. However, the IMEI or MSISDN or IMSI, indicated in step 41 will be different from the IMEI or MSISDN or IMSI extracted in step 40, when the user has put a SIM card into a different mobile phone compared to the mobile phone for which the whole payment service was initially registered.

The MSDN and/or MSISDN and/or IMEI and/or IMSI can also be checked separately with the Mobil Network Provider e.g. via asking for the MSDN and/or MSISDN and/or IMEI and/or IMSI of the sending IP address (second entity) or just by asking if the combination MSDN and/or MSISDN and/or IMEI and/or IMSI and sending IP address of the second entity is ok. Also mobile operators offers services to put in the user identification into a data stream. Any way to check via a third party if the given information are valid is possible.

In step 42, the server will compare the first and the second unique ID and will proceed to a matching of messages performed in item 141 in Fig. 3a, when both IDs match as indicated in 43. When, however, both IDs do not match, as indicated at 44, then the server will deny a further procedure and may initiate counter measures as indicated in 45. Therefore, this check will be a pre-check performed by the message matcher 131, before the actual matching of two different messages will be performed. This initial check provides a convenient and easy examination of the second message without any additional operations in order to early reject non-allowed messages and even hostile attacks.

Fig. 4a illustrates the preferred implementation of the second entity 12 for performing a transaction with a first entity 11 under control of a server device 13. The second entity preferably comprises an identification code reader 120 for reading an identification code generated and output by the first entity, where the identification code has encoded information on the transaction. In one embodiment, the identification code reader comprises a digital camera in order to take a photograph of the code 121. Furthermore, the preferred way of reading the identification code will be a one-way communication 122, for which a second entity will not have to transmit any information to the first entity and where the second entity has the full control over what is transmitted from which entity to which entity. The code 121 is input into an information provider 123 for providing the information on the transaction included in the identification code. In one embodiment, the information provider will be an identification code interpreter, such as an identification code decoder. Alternatively, the identification code can be decoded by any other means and the code or the code information or at least the transaction information can be even be manually input into the system so that the information provider would be an input device such as a keyboard, a mouse, a trackball or any other device. The information provider 123 will output the transaction information 124 and forward the transaction information to a message transmitter 126. The message transmitter 126 will transmit the second message 125 to the server wherein the second message comprises the transaction information 124.

Additionally, the second entity comprises a confirmation receiver 127 for receiving, from the server, an information message 128, indicating that the second message 125 has a predetermined relation to the first message 115, received from the first entity 11. The confirmation receiver will output a confirmation output 129. The second entity preferably comprises an additional information storage 150, having additional data, such as a unique ID/IMEI or MSISDN or IMSI as discussed in connection with Fig. 3b or having information on payment details, etc., which can be forwarded to the message transmitter 126, so that the second message 125 not only includes the transaction information 124, but such additional information provided from the additional information storage 150.

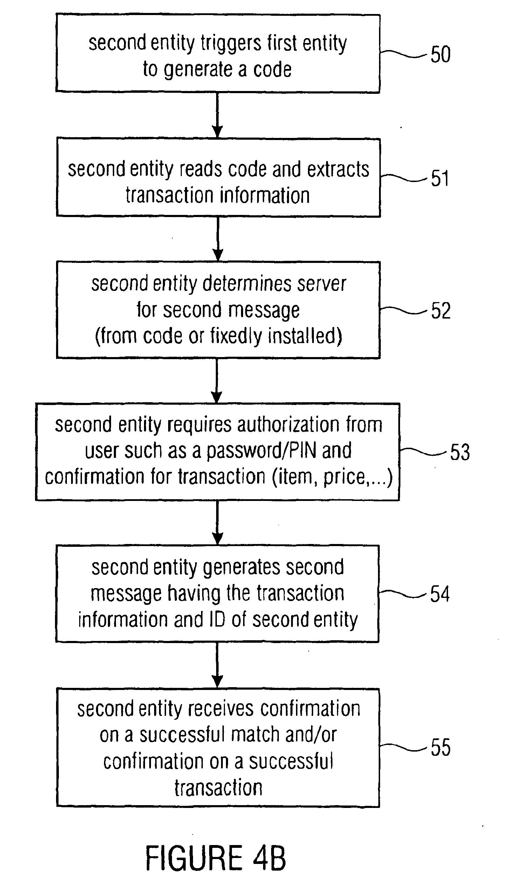

Fig. 4b illustrates preferred processes performed by the second entity 12. In step 50, the second entity approaches a first entity and triggers the first entity to generate an identification code. In step 51, the second entity reads the code and extracts the transaction information from the code. In step 52, the second entity determines the server to which the second message is to be sent. The information on the server can be included in the identification code read in step 51, and is extracted from the code in this embodiment. In a different embodiment, the address for the server to which the second message is to be sent can be fixedly installed and, for example, included in the additional information storage 150 of Fig. 4a. In step 53, the second entity, such as the mobile phone or any other mobile or stationary device will require an authorization from the user, such as a password or a PIN and preferably, confirmation for a certain transaction. Alternatively or additionally, the third entity requires an authentication from the user as well. Then, in reply to step 53, the actual human user will input the password or PIN, so that the second entity will continue with the process. In step 54, the second entity will generate the second message having the transaction information and, preferably, an identification of the second entity. Step 53 does not necessarily have to be performed immediately before step 54, but can be performed at any place before generating or actually transmitting the second message to the server. This makes sure that the second message is only transmitted from a second entity which has been fully authorized by the human user. In step 55, the second entity will receive a confirmation on a successful match and/or confirmation on a successful transaction.

As outlined later on, an additional embodiment comprises the server asking for the PIN at the second entity. Simultaneously, the server sends a user name or customer name to the second application on the second entity. If a faked application has been installed on the second entity and this faked application conducts the communication, this faked application will be in the position to ask for the PIN, but the faked application will not be in the position to display the username or customer name, which is an additional security feature.

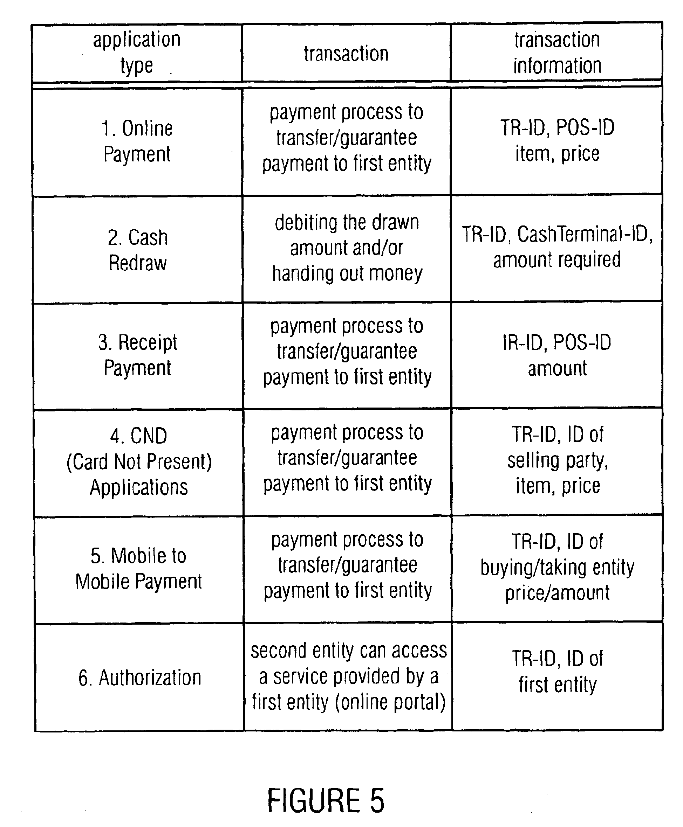

Fig. 5 illustrates six different applications and the corresponding transactions and a preferred collection of transaction information which can be included in the identification code generated by the first entity and which can also be preferably included in the first message or the second message.

Subsequently, the inventive process will be summarized and specific implementations as summarized in Fig. 5 will be discussed in detail.

Preferably, the transaction information being represented as a data file or being considered as a data file comprises the data entity to be subdivided into the first data portion and the second data portion. Alternatively, other information pertinent for the third entity or for the intended transaction or for the data matching is included in the data entity and is distributed into the first data portion and the second data portion and depending on further implementations on further data portions.

Since the introduction of electronic payment and account authorization, criminals have been searching for ways to steal sensitive payment/account data for their criminal activities. The objective of the solution described in this patent is to strengthen the security of the payment transaction or authorization (for example protect access to a online services) by avoiding the necessity to hand over any sensitive payment details from the buying party (for example credit card number) to the selling party which can be used for criminal activities and at the same time simplifying the use of mobile paying. The same procedure can be used for any other kind of authorization like access to web services (e-mail), login to company networks etc.

As the procedure for authorizing a login to an online service is similar to the process of payment, the selling party can also be the web service provider. The buying party can be the person who wants to access the web service. The payment server is the server who processes the authorization. The payment details are similar to the login credentials. Each party involved benefits from this method of payment/authorization. Major benefits are:
- The buying party does not have to disclose sensitive data incl. payment details to any third party.
- The risk that his/her data will be misused is reduced to nearly zero.
- The selling parties' risk of unintentionally disclosing the sensitive payment details of his/her customers is reduced significantly, since they don't receive those data. This reduces their efforts to store and protect user data.
- The number of fraud claims to the payment companies can be reduced to a minimum.
- The buyers don't need to enter data into their mobile phone since this is done by the application through reading the Auto ID Code.
- In case of authorization processes the major benefit is that even the data is stolen nobody is able to misuses the stolen data.

In current payment/authorization scenarios, it's often necessary to hand over sensitive payment data by the buying party to the selling party. This data can in some cases be easily copied and stolen. These risks also apply for authorization processes. Some actual examples:
- Theft during the data transmission
- Theft of the data on the server of the selling party (e.g. hacking, on site theft, etc)-Fraudulent manipulation of the reading devices to capture the sensitive payment data (e.g. manipulated card readers, manipulated keyboards, skimming, etc)
- Criminal acts by people during CNP (Card Not Present) payment processes
- Copying of credit card data in restaurants etc.
- Theft of login credentials.

The core of this new solution is a concept or method where the buying party does not have to hand over sensitive payment data (like credit card numbers) to the selling party in order to perform the payment transaction. This concept might be used as well for any other action where authentication/authorization is needed. The Transaction ID send by the buying and selling party is matched by the (PaymendAuthorization) Server.

In this new concept/method of payment/authorization, existing technologies are used but in such a way that weaknesses of the current payment/authorization processes are substantially reduced.

This is achieved by capturing/reading an Auto ID code (e.g. QR Code), given by the selling party, with a device (e.g. mobile phone, etc). By capturing/ reading the Auto ID code the data inside the Auto ID code is received by the buying party (e.g. optical capturing/reading with a camera, etc).. This data (or parts of the data) is sent (e.g. via a mobile phone network, etc) to the secure payment server which is connected with the buyers' payment company. Alternatively the Auto-ID code can be read by the user (buying party) and put in manually into the (mobile) device.

Preferably, the transaction information being represented as a data file or being considered as a data file comprises the data entity to be subdivided into the first data portion and the second data portion. Alternatively, other information pertinent for the third entity or for the intended transaction or for the data matching is included in the data entity and is distributed into the first data portion and the second data portion and depending on further implementations on further data portions.

Fig. 6 illustrates a scenario between different entities, where the first entity is, for example, a store, the second entity is, for example, a mobile phone and the third entity is, for example, a server matching messages from the first entity and the second entity as discussed before in order to finally perform a certain action, which depends on the matching result. When the messages match, then a certain action will be performed and when the messages do not match, a certain action will not be performed, where this certain action may, for example, be a payment transaction etc.

In an embodiment, the first entity and the third entity share a common secret or, in other words, an encryption key K1. This key is known to the first entity and the third entity, but not to the second entity. On the other hand, the second entity and the third entity share a common secret or, in other words, a key K2. Naturally, this common secret or key need not necessarily be a symmetric encryption key, the same procedures can also be applied in the context of asymmetric encryption where a public and a private key exist. In this application, it is, however, of importance that the key authentication is safe which can, for example, be performed by a certificate from a trusted authentication authority.

Fig. 7 illustrates another embodiment, in which the key K2 is generated by the first entity and transmitted to the second entity via a 2D code. Alternatively to the procedure illustrated in Fig. 7, the transmission between the first entity and the third entity can take place in plain text instead of being encrypted by the key K1 known to the first entity and the third entity, but not known to the second entity. It is beneficial for this application that the keys can be generated in a de-centralized way, i. e., by the first entity which is, for example, a point of service store or so. This device only needs a simple random number generator or pseudo-random number generator in order to generate a key which can then be transferred from the first entity to the second entity. In this implementation, the generation of the key in a de-centralized way by the first entity is very efficient, since neither the second entity which is typically a mobile phone nor the third entity must perform any key management which otherwise would be required. Since this service is for any imaginable payment transaction or service transaction as defined in Fig. 5, the number of users can be extremely high, and, therefore, the number of keys to be managed by the third entity or by mobile phones would be high which again would result in high costs. All this is not necessary when the keys are generated by the first entity, i. e., by the store or a point of service (POS).

Fig. 8 illustrates another embodiment, in which a double encryption takes place, and where the key K2 is generated in a de-centralized way.

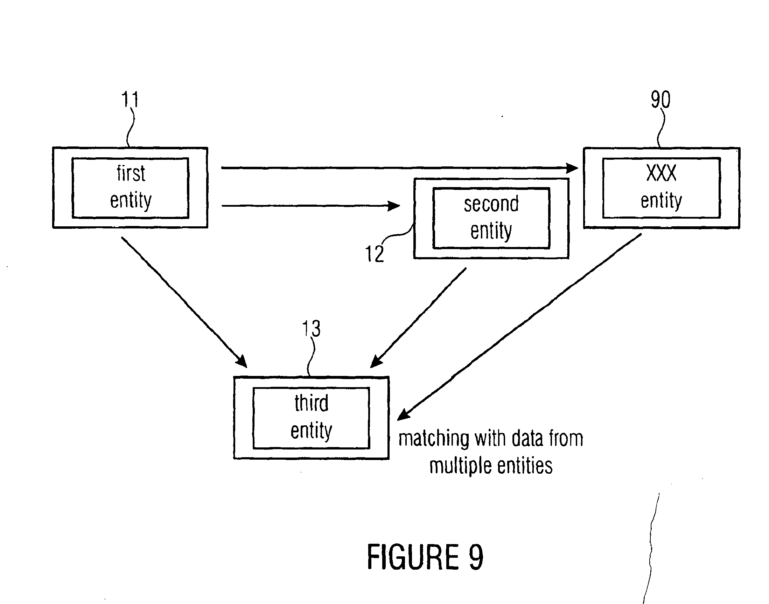

Fig. 9 illustrates a scenario, in which the third entity performs a matching with data from multiple entities. The data from multiple entities can be matched preferably using the procedure as described in connection with Fig. 10. For multiple entities, the message mentioned in Fig. 10 or the encryption key or other data to be transmitted part by part via different transmission channels has to be split in a number of parts which is at least equal to the number of entities -1. Therefore, when there are 5 entities, where the third entity is the server, the data between four entities, i. e., the first entity, the second entity, the fourth entity and the fifth entity would have to be matched by the server, which means that at least four parts of a file or key have to be generated when splitting the encrypted file or the encrypted key or the plain text key or even the plain text file.

Fig. 11 illustrates another embodiment, in which the encrypted file or encrypted key is split in several portions. It becomes clear that the first entity, for example, splits the encryption key, which has been generated by the first entity, into eight portions. Portions 3724 are transmitted, together with encrypted data to the second entity preferably via an auto-ID code. The second entity simply uses these portions 3724 together with the encrypted data and forwards this data message to the third entity. The third entity receives, from the first entity, the encrypted data together with the portions 6815, i. e. the other four portions of the encryption key. Now, the third entity can extract the portions 6815 and 3724 from the messages received from the first entity to the second entity in order to assemble the key and, subsequently, the third entity can decrypt the encrypted data received from the first entity and can decrypt the encrypted data received from the second entity using this reassembled key. Then, the third entity can match the decrypted data in order to find out, whether this data is in a pre-determined relation to each other so that, in the end, a payment transaction or any other transaction as discussed in connection with Fig. 5 can be triggered in case of a positive match or can be denied in case of a negative match. One way of matching the data is that the decrypted data received from the first entity and the decrypted data received from the second entity are identical to each other.

It is to be emphasized that the Fig. 11 embodiment only requires a single key generated by the first entity in a de-centralized way. This key is used by the first entity to encrypt data in order to obtain encrypted data. The key is transmitted to the third entity via the two different communication channels and in portions. Thus, any attacker reading the communication between the first entity and the second entity or reading the communication between the second entity and the third entity or only reading the communication between the first entity and the third entity, will not be in the position to decrypt the encrypted data due to the fact that each communication only includes a part of the key rather than the whole key. It is clear that all parts of the key is in plain text, but only a portion of the key in plain text will not be sufficient for decrypting the encrypted data.

This scenario is particularly useful for payment applications, since only the first entity which is preferably a point of sale/point of service/store. Only this store has to generate a single key for each transaction using a random number generator, a pseudo-random number generator or a (semiconductor) digital storage where a certain number of pre-generated keys are stored. Additionally, the first entity must be in the possession of an encryption functionality, but the second entity which is typically a mobile phone simply has to, in a preferred embodiment, read the QR code having the key portion 3, 7, 2, 4 and the encrypted data and to extract this data from the QR code so that this data can be retransmitted to the third entity. Thus, the second entity does not need any key in this embodiment.

Only the server/third entity needs a decryption capability and needs knowledge either included in the transmission or in a pre-agreed form, how the different key portions received from the first entity and the second entity have to be assembled to each other.

In one embodiment, the message from the second entity to the third entity additionally includes an information how the key portions transmitted from the first entity to the third entity have to be assembled, and the message from the first entity to the third entity additionally comprises information how the key portions included in the message from the second entity to the third entity have to be assembled.

Furthermore, one key portion such as the key portion 6815 transmitted from the first entity to the third entity could be encrypted using the other key portions, such as 3724 as a key. In this embodiment, the transaction between the first entity and the third entity would even be an encrypted transaction with respect to the key portion 6815, and the third entity would have to firstly extract the plain text key portions 3724 in order to decrypt the encrypted key portion 6815 so that, subsequently, the whole key for the encrypted data is retrieved and used by the third party to decrypt both data in order to be in the position to finally perform a data matching.

Subsequently, an additional preferred embodiment is discussed in connection with Fig. 6. As soon as the third entity had determined that the data received from the first entity and the data received from the second entity match with each other, the payment can be authorized. However, in order to obtain more security, the third entity generates a request to the second entity so that the second entity is prompted to enter a personal identification number similar to a personal identification number to be input at a cash machine in a bank. This request is encrypted by the third entity using the key K2 and is transmitted to the second entity in encrypted form. The second entity now decrypts this request using the key K2 and displays this prompt on the display on a mobile phone. Now, the user inputs her or his PIN only in his mobile phone, and her or his mobile phone receives this personal identification number and encrypts the received personal identification number and sends the encrypted personal identification number back to the third entity. Now, the third entity looks, whether the personal identification number, which has been obtained by decrypting the message from the second entity using the second key matches with a pre-stored personal identification number managed by the server. When this matching is positively determined, then the third entity finally triggers a payment action or any other action as discussed in connection with Fig. 5. Hence, the matching between the messages is performed as a pre-check and only when this matching is successful, the third entity will request an encrypted PIN transmission from the second entity. Thus, it is assured that any transmission of an encrypted PIN from the second entity to the trusted third entity only takes place, when the pre-check was successful, i. e. when it can be said with a high probability that any attacks have not taken place.

Additionally, a further security can be obtained, when the third entity, when asking the second entity for the PIN additionally transmits a user name of the second entity registered at the third entity. Then, the software application running on the second entity will display this user name together with asking the mobile phone user for her or his PIN. When the user name displayed on the mobile phone is not what the user expected, then the user can abort the whole procedure, since it is highly likely that any attack has taken place, for example, on the software or hardware of the mobile phone or on the transaction. In such an attack, a faked application running on the mobile phone could display, as the user name, always the user name the user has for his or her mobile phone such as his personal name, but when the user has selected a different user name such as an alias name for a registering with the third entity, then an additional security is obtained.

Subsequently, a further embodiment of the present invention is discussed in connection with Fig. 9, which can be used not only for payment purposes, but also for other application scenarios. Such a scenario is that, for a certain transaction, exceeding a predetermined amount of money, at least two CEOs of a company have to sign. Stated in other words, the scenario refers to a clearance of a certain amount of money which needs the signatures from at least two CEOs. This scenario refers to four entities. The fourth entity, which is, for example, a bank or a payment institute asks for payment authorization. To this end, this fourth entity generates a data file which is split into three portions. The first portion is transmitted to a first entity, which is used for generating QR codes. The second portion is sent to a second entity, which is, for example, the mobile phone of one of the CEOs, and the third portion is sent to the third entity, which is another mobile phone from the other CEO. The first entity generates a QR code for the first CEO, and the first CEO acquires and decodes this QR code in order to get the second portion of the data. Additionally, the first entity displays the first portion of the data to the second CEO (third entity), and the second CEO acquires and decodes the third portion of the data. Now, the first CEO (second entity) and the second CEO (third entity) transmit their corresponding data portions back to the first entity or even back to the bank, where the bank can additionally receive the first portion again from the first entity. When, however, the first CEO (second entity) and the second CEO (third entity) send their data back to the first entity preferably with a dedicated encryption key which is known only to the first entity and to the corresponding CEO and not known to the other CEO, the first entity can perform a matching of data in that the first entity checks whether the piece of data, i. e., the second portion received from the first CEO matches with the third portion received from the second CEO and with the first portion residing at the first entity.

After this matching, the first entity can start a communication with the first CEO and with the second CEO as discussed before, so that the first CEO and the second CEO can input their PIN into their respective mobile phone to trigger an encrypted transmission in order to finally confirm a payment or approval procedure. Again, this PIN request and transmission is only performed after a successful match has taken place before.

A further implementation for obtaining two "signatures" from CEOs residing at different locations would be the following. The first entity 11 in Fig. 9 has a certain contract which needs the signature from two different CEOs of a company. One CEO is represented by the second entity and the other CEO is represented by xxx entity 90. Alternatively, the data entity does not necessarily have to be a contract, but can also be a payment processing instruction for triggering a payment action or any other instruction for triggering any kind of transaction other than a payment transaction. The first entity would now subdivide this data entity, i.e. the contract or the transaction instruction document into three different portions. The first entity would transmit the first portion directly to the third entity 13. Furthermore, the first entity 11 would care for displaying the second portion with respect to the second entity in the form of, for example, a QR code and the second entity 12 would capture this second portion. The third portion would also be displayed to the third entity 90 preferably also with a QR code so that the third entity 90 can capture this QR code as well. This can, for example, be obtained when the second entity 12 and the third entity 90 log in at a website under the control of the first entity 11, but where the second entity and the third entity being the mobile phones of the corresponding CEOs are residing at geographically different locations.

Then, the second entity 12 would intend to send its data portion to the third entity 13. After sending the data portion or before sending the data portion, the third entity would ask the second entity for a personal identification and as soon as the personal identification from the second identity 12 is verified, the second entity would then transmit the second data portion, or if the second data portion is already transmitted, the third entity would further process the received second data portion. In order to enhance the security of the verification or authorization, the third entity would send a user name registered by the CEO processing the second entity before. Then, the second CEO then being prompted to enter the personal identification information could also verify the displayed user name in order to check whether the displayed user name is the expected user name or is any other user name. If any other user name appears, this could be an indication for any kind of attack, either on the software of the mobile phone or on the transmission channel from the third entity to the second entity.

The same procedure is performed with the third entity 90 and as soon as both entities 12, 90 have been successfully authorized, the data portions from these entities are matched by the third entity be reassembling the data portions. Then, a reassembled data entity is obtained, which is further processed such as by a document reader, a document storage, an instruction trigger or the like. Upon reading the reassembled document, it will appear whether the three different data portions belong together or match with each other. If they do not, then the content of the document will be useless. Other further processing operations are a decryption of the encrypted data file consisting of the three encrypted data portions, where the decryption will reveal whether the data portions were correctly received from the different entities, since if they were not, the outcome of the decryption would be an error or a useless document not having any useful information.

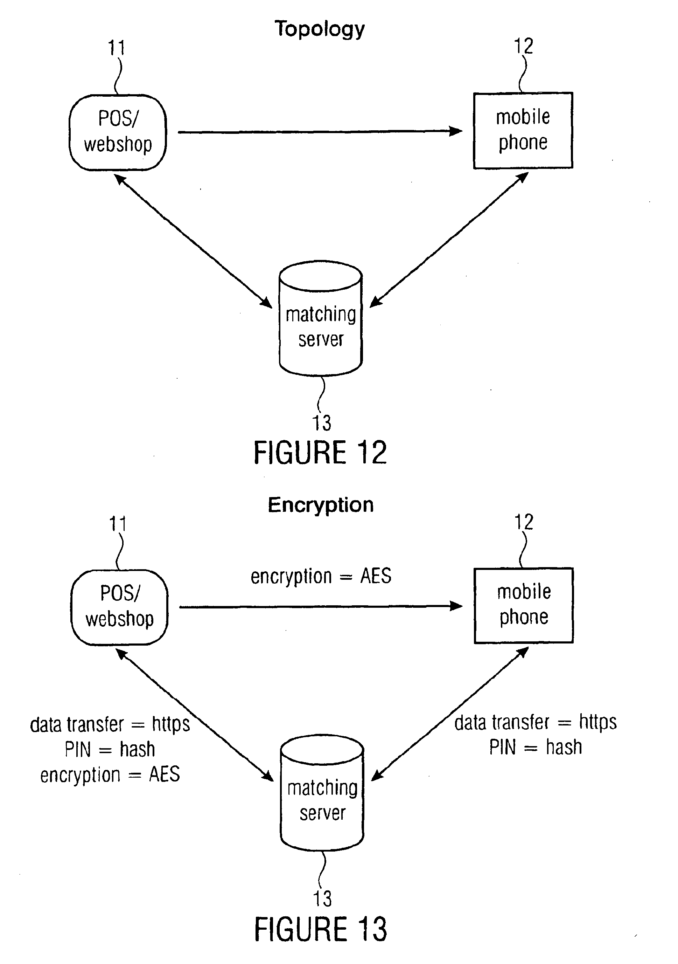

Figs. 12 to 17 illustrate embodiments for a further implementation and requirements and functionalities of the three entities in accordance with an aspect of the invention.

Fig. 12 illustrates a topology where the first entity is a POS/web shop, the second entity is a mobile phone and the third entity is a matching server, and where the data entity has been subdivided in the POS web shop 11 and has been reassembled in the matching server 13. Fig. 13 illustrates encryption details for encryption procedures between the different entities. Preferably, the data file/data entity used by the web shop 11 for subdivision in order to obtain the first and the second data portions is an encrypted file and is preferably AES encrypted. To this end, a symmetric encryption key known to the first entity 11 and to the third entity 13 and not known to the second entity 12 is used. The second entity 12 transmits the second data portion received from the first entity 11 to the third entity in encrypted form after having been authorized using a personal identification information PIN.

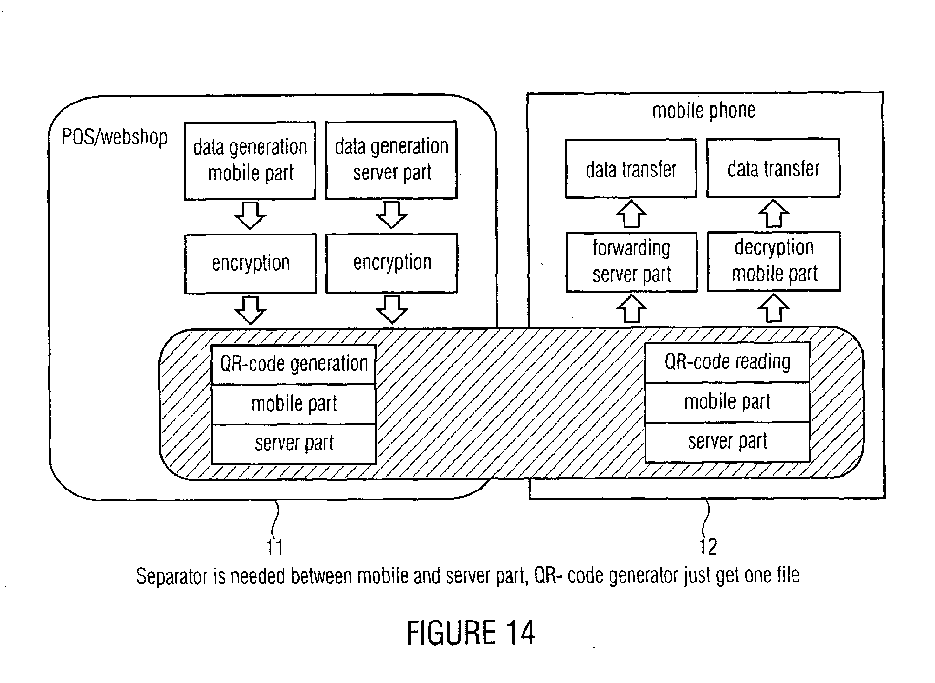

Fig. 14 illustrates the different tasks performed by the first entity 11 and the second entity 12, where the first entity 11 has two different data generation parts, where one data generation part is for generating and encrypting data specifically intended for the mobile phone 12, and where the other data generation part is for generating and encrypting data intended for the server 13. Both parts are included into a QR code as illustrated in Fig. 14. The QR code is displayed by the first entity 11 and acquired by the mobile phone and processed by the mobile phone, where the data for the server, i.e. the data portion of the data entity is forwarded from the mobile phone to the server, and where the data portion intended for the mobile phone is decrypted by the mobile phone 12. Therefore, the encryption blocks in block 11 of the Fig. 14 use different keys, where a first key information K1 is used for the secure communication between the first entity and the third entity, and where a second key information K2 is used for the secure communication between the mobile phone 12 and the server 13.

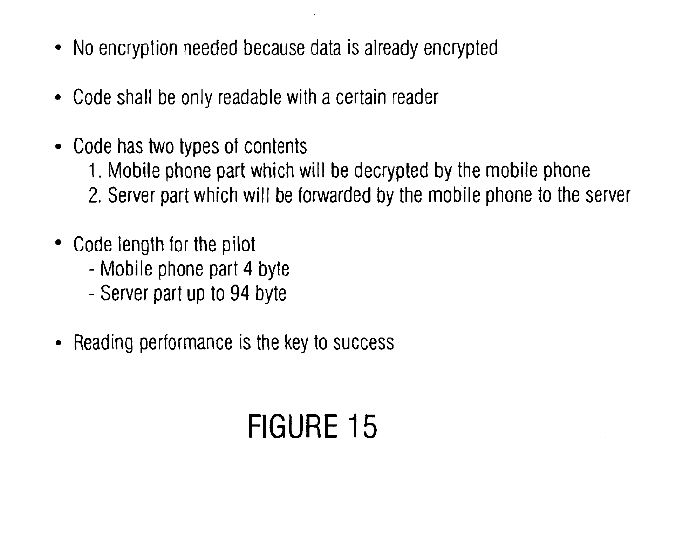

Fig. 15 illustrates some implementation information for the procedure displayed in Fig. 14.

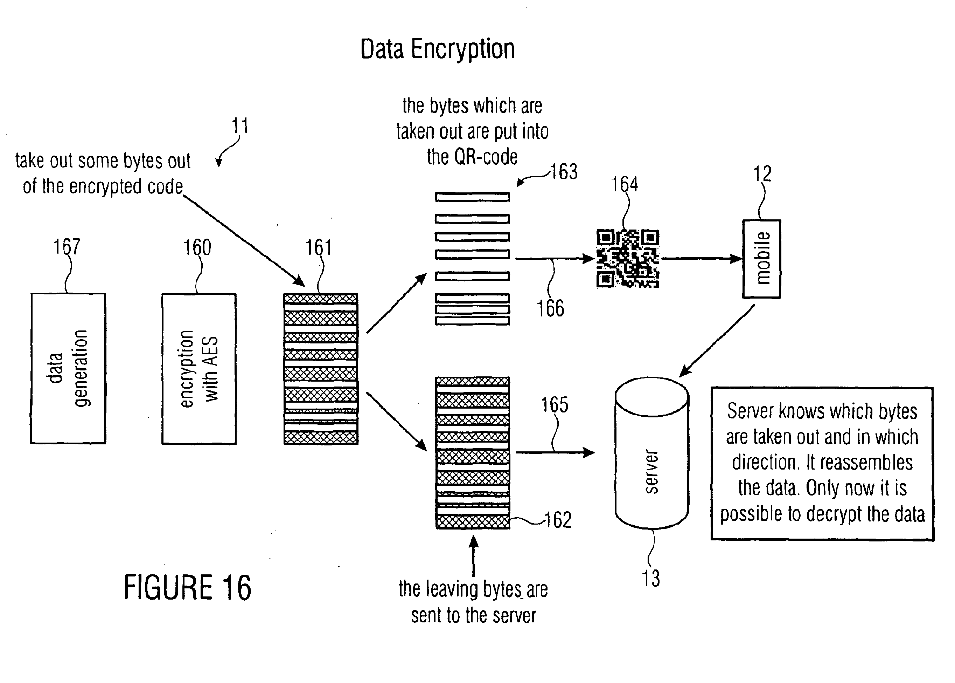

Fig. 16 and Fig. 13 illustrate preferred implementation of the present invention, where the data entity is an encrypted data entity as output by block 160 residing in the first entity. The data entity is specifically illustrated at 161 and the first data portion is indicated at 162 as the "bytes left" into the encrypted file, and the second data portion is indicated at 163. The second data portion is processed into a QR code 164 and the QR code 164 is acquired by the mobile device 12. Furthermore, the first data portion 162 is transmitted as the first message 165 to the server, while the second data portion is included in the second message 166. Preferably, the data entity comprises the transaction data or key data as generated by a data generator 167.

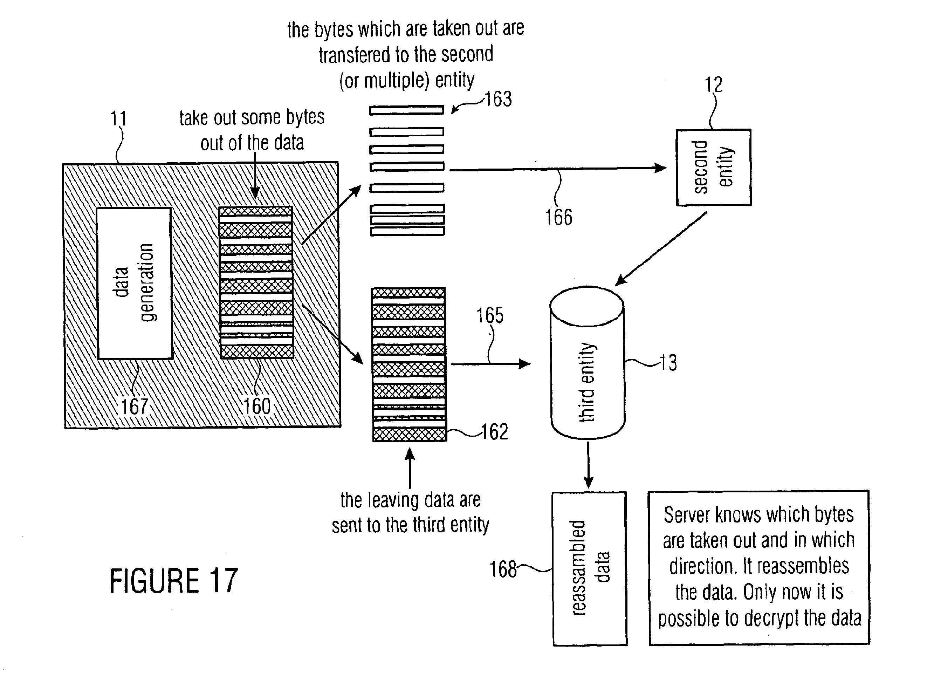

Similar reference numbers in Fig. 17 indicate similar elements with respect to Fig. 16. As becomes clear particularly from Fig. 16, the server 13 (third entity) knows which bytes have been taken out and in which direction the bytes have been taken out. The server 13 reassembles the data and only when the correct data has been reassembled in the correct order is it possible to decrypt the data or the decryption results in a useful plaintext. The result of the assembling information performed in the server, which can be controlled by a subdivision/assembling information specifically transmitted from the first entity, reassembles data, i.e. the data entity 168 is obtained, which can then be further processed such as decrypted or processed in any other way described before.

The aspect is related to a method and apparatus for lowering the data traffic and improving the security via two way transmission, first entity, second entity and third entity.

Nowadays data transfer suffers from security breaches like phishing, man-in-the-middle attacks, password stealing etc. The aspect illustrated indicates how to lower the data traffic via a two or multiple way transmission.

In one embodiment 1 - x Bytes are taken out of the whole data, where x is smaller than the whole amount of data, so that one has at least (but not limited to) 2 parts. The first remaining part will be sent to the server directly. The other part will be sent via the third entity, for example a mobile phone via any transmission technology, preferably via an Auto-ID Technology like 1D, 2D Codes or NFC. Especially the use of 2D codes improves the security and protects the privacy of the mobile phone user because the first entity in this case does not know anything about the second entity. As the single parts are useless without the other part(s), only the server is able to re-assemble the data after it has received all parts. A potential attacker has to catch all data via all communications paths plus he has to know how to reassemble and maybe also how to decrypt with which key. By taking out some bytes out of the original data there is no need to use compression technologies.

Furthermore, it is preferred to distribute the data portions not equal into both "ways". Instead, more than 50 percents of the whole data are sent from the entity to the server directly, and less than 50 percents are put into the Auto-ID technology representation, such as 1D, 2D Codes or NFC. This has the advantage that one can introduce less data into the 1D, 2D Codes or NFC. This will immediately result in an improved 1D, 2D Codes or NFC generation speed and also and even more importantly result in an improved reading speed of e.g. a mobile phone reading a QR code. Although the data is distributed non-equal, this does not result in a security reduction.

A preferred sequence of steps is:
The Pos generated a data record.
This data record is encrypted by e.g. AES.

From the encrypted data record, x bytes a taken out. E.g. the data record has 512 bytes, and 20 bytes are taken out. The server knows which bytes have been taken out an in which order this has been done.

The remaining bytes are directly sent to the server.

The remaining bytes (e.g. the 20 bytes) are packed into a QR code, displayed by the pos, read by the mobile phone and sent from the mobile phone to the server.

The server reconstructs the encrypted data record and decrypts the reconstructed data record. Although encryption enhances security, another embodiment can also use only a compressed (and not encrypted) version of the data record or even the data record itself without and compression and/or encryption.

Advantages are that data manipulations can be detected immediately, both data records individually are not readable even if someone had the key, and the reading speed is enhanced due to the non-equal distribution.

It is preferred to put less than 40 % of a data record and even less than 20 or even less than 10% or even less than 5% of the data record into the code and to send the remaining majority of the data record directly to the server.

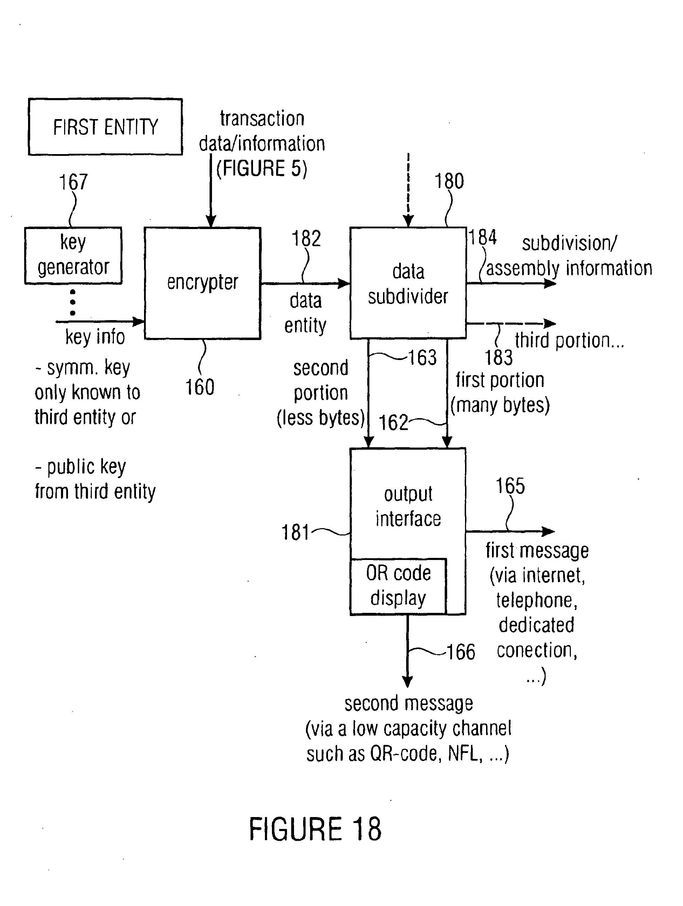

Fig. 18 illustrates a detailed block diagram of a first entity for communicating with a second entity and a third entity in accordance with one embodiment of the invention. The first entity comprises a subdivider 180 for subdividing a data entity 182 into a first data portion 162 and a second data portion 162 and preferably further data portions 183. Furthermore, the data subdivider is configured for generating subdivision information 184 indicating the way of subdividing the data entity, where the subdivision/assembly information 184 can be transmitted to the third entity via a dedicated message or can be attached to the first message 165 and/or the second message 166 as an additional information or side information. Furthermore, the first entity comprises an output interface 181 for transmitting the first message 165 to the third entity, where the first message 165 comprises the first data portion, and where the first message does not comprise the second data portion. Furthermore, the output interface 182 is configured for outputting a second message 166 which can take place, for example, via a QR code display, but which can also take place via any other kind of output interface. The second message 166 comprises the second data portion 163, and does not comprise the first data portion 162.

In an embodiment where the subdivision/assembly information is transmitted from the data subdivider 184 to the third entity, the subdivision manner does not have to be pre-agreed between the first entity and the third entity. In alternative embodiments, however, the first entity and the third entity agree upon a specific kind of subdivision manner corresponding to a specific assembling manner so that any subdivision/assembly information does not have to be generated or does not have to be transmitted.

Depending on specific embodiments, the data entity can be a data file or a key, and it is preferred to transmit the first message via a high capacity channel such as the internet, a telephone channel, a dedicated connection or the like, while the second message comprises a low capacity channel such as a QR code acquisition, a near field communication or any other related communication channel only having a smaller capacity than the channel over which the first message 165 is transmitted.

Preferably, the second message comprising the second portion only has a small percentage of the bytes of the whole data entity, where for example values of less than 10 % of the bytes of the data entity for the second data portion and more than 90 % of the bytes of the data entity for the first data portion are preferred so that a very good adaptation of the data transmission amount to the data channel capacity is obtained. Furthermore, the processing capacity of the second interface, which would typically be a mobile phone, i.e. the receiver, for the second message can be easily implemented and the whole processing power required for processing the second data portion is low when the second data portion itself is low as well. Since the second data entity is preferably a mobile device, reducing the processing load in this device has many advantages starting from costs for the user to a reduced battery consumption, etc.

In an embodiment, the data entity is a key so that the data generator 167 is a key generator in the first entity. The key generator can generate the dynamic key K2 as discussed in the context of Fig. 7 and Fig. 8 and can provide the key to the encrypter 160 in order to encrypt data such as transaction data/information as discussed in the context of Fig. 5, which is also provided to the encrypter 160 as illustrated in Fig. 18. Then, the output of the encrypter 160 will be the encrypted data entity.

Alternatively or additionally, the encrypter 160 can receive the information not locally generated on the first entity, where the key information can be a symmetric key only known to the third entity and the first entity or can be a public key from the third entity in the context of an asymmetric encryption algorithm. Depending on the implementation, the data subdivider can also be configured for scrambling bytes of the data entity selected for the second data portion using encryption/scrambling information allowing a decryption in the third entity and not allowing a decryption in the second entity.

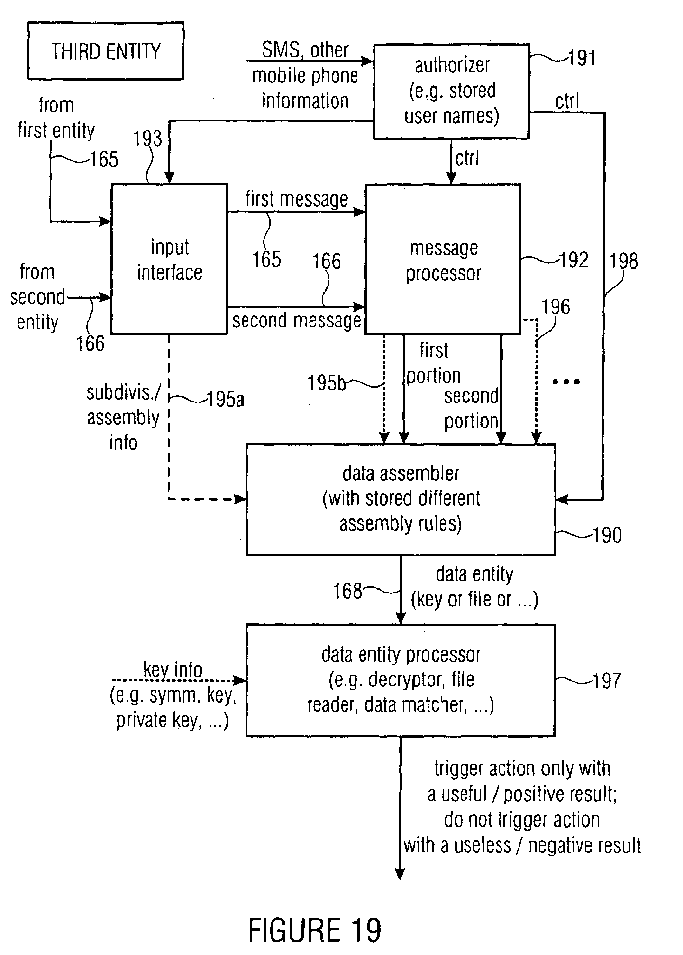

Fig. 19 illustrates a preferred embodiment of a third entity for communicating with a first entity and a second entity, wherein the third entity comprises an input interface 193 for receiving a first message 165 from the first entity and a second message 166 from the second entity, wherein the first message comprises a first portion of a data entity and wherein the second message comprises the second portion of the data entity. Furthermore, a message processor 192 for processing the first message and the second message are provided to obtain the first portion of the data entity and the second portion of the data entity extracted from the messages. The first portion and the second portion obtained by block 192 are input into a data assembler 194 assembling the first portion and the second portion to obtain the data entity 168. The data assembler 190 is configured for using a predefined assembly rule or for using assembly information provided via line 195a from the input interface 193, when the subdivision/assembly information is transmitted via a separate message from the first entity to the third entity. However, when the subdivision/assembly information 195a is attached to the first message 165 or to the second message 162, the message processor 192 extracts the subdivision/assembly information and provides this information via line 195b to the data assembler 190. Depending on the implementation, the input interface is configured for receiving more messages from other entities, and therefore, the message processor 192 will extract more than two data portions as indicated via line 196.

The data entity 168 is preferably input into a data entity processor 197, which is implemented as a specific data matcher for matching identical data in the first message and the second message, when the data entity is a key as discussed in the context of Fig. 11. Alternatively, the data entity processor 197 will be a general data matcher specifically implemented as a decrypter, a file reader or in the other data processor for checking, whether data portions match with each other in a sense that the further processing operations are just reading, decrypting, etc. provides a useful output as discussed before.

Depending on the outcome of the data entity processor, any action to be controlled is triggered. Specifically, the action is triggered only with a useful/positive result of a file decryption, a file reading or a data identity matching operation. However, when these operations do not result in a useful or positive result, i.e. when these actions have as an outcome, a useless/negative result, then the specific action is not triggered.

Additionally, the third entity comprises an authorizer 191 for requesting a personal identification from the second entity in response to a receipt of the second message for validating a personalization information from the second entity and for controlling the data assembler 190 via control line 198 in response to a positively validated personal identification and to not assemble the data in response to a negatively validated personal identification. The authorizer 191 can be configured for using, in the process of validating, other mobile phone information or an SMS from the second entity. Additionally, the authorizer may transmit a user name from the second entity registered with respect to the third entity to the second entity so that the second entity can verify this user name which has preferably been pre-agreed on before the third entity and the second entity.

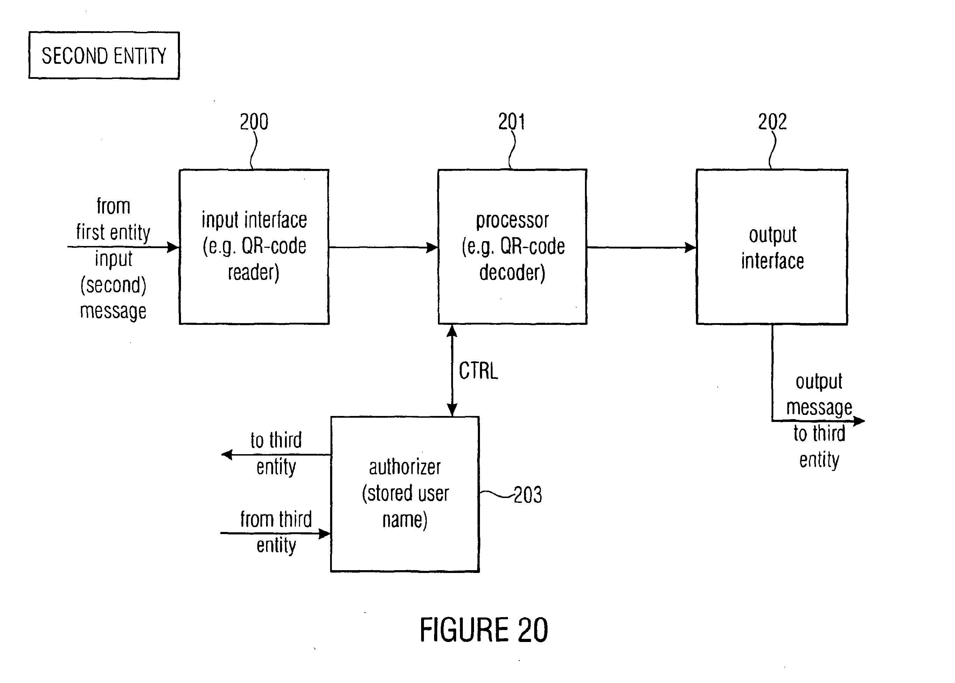

Fig. 20 illustrates a second entity for communicating with a first entity and a third entity, wherein the second entity comprises an input interface for acquiring an input message generated by the first entity. The input interface is indicated at 200 and the input message is, in the context of Fig. 18 and Fig. 19, the second message generated by the first entity.

The second entity furthermore comprises an output interface 202 for transmitting an output message to the third entity, and this output message corresponds to the second message 166, for example from Fig. 19.

Furthermore, a processor 201 is provided for generating the output message based on the input message. The second entity additionally comprises an authorizer 203 to receive a personal identification request from the third entity before or in response to transmitting the output message to the third entity and to send the personal identification information input by a user into the second entity to the third entity.

Preferably, the second entity is a mobile phone, the input message is a QR code generated by the first entity, and the processor 201 is adapted for decoding the QR code and to introduce information extracted from the QR code into the output message.

Furthermore, the authorizer 203 is configured for displaying a user name received from the third entity to the user, which is displayed together with a prompt for entering the personal identification number.

In an embodiment, the input message received by the input interface 200 comprises a key information, and the input message additionally comprises an encrypted or non-encrypted data entity portion. Then, the processor 201 is configured for extracting the key from the input message and for encrypting the data entity portion to obtain the output message.

The embodiments of the first entity described so far relate to a data subdivider 180 (Fig. 18) in the first entity. However, in other embodiments the data subdivision can be done beforehand and the first entity is only in the possession of a data portion, where the second entity is in possession of the second data portion belonging to the first data portion. Hence, the distribution of the second data portion to the second entity has not taken place from the first entity, but the second entity has received the second data portion via any other channel not originating from the first entity. This procedure can be used for performing a remote control of a device which has, for example, an address like IPv4 or IPv6. The device like, for example, a power switch or a refrigerator has, as the first entity, a part of an encrypted of QR code as the first data portion. In order to remotely control the first entity, the second entity reads the code. Additionally, the second entity is in the position of the second part of the encrypted QR code, or stated generally, the second data portion. Now, the second entity reads the code from the first entity and adds his own information like a certificate or his own part of the encrypted QR code to the data transmitted to the sever and sends both parts to the server.

The server checks both parts by any kind of data matching such as assembling the two QR code parts and subsequently checking whether the assembled QR codes result in a useful output. If the output obtained by the data assembling matching is a positive result, then the server allows the second entity to remotely control the first entity. Alternatively, the server can also directly access the first entity.

This scenario is particularly useful for powered devices having IP addressed. Particularly, such IP addresses such as IPv6 are quite complicated or users to deal with, since these addresses are quite long and therefore non-comfortably processed by a user.

A further example for a remote control could be to power on and off a power switch, to power on and off a heater or to power on and off an air conditioner or any other electric device in a home or office scenario. This embodiment makes the remote control much for comfortable and adds additional security features to the remote control due to the data matching.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Therefore, the present invention relates to an apparatus, method, computer program for operating a first entity, a second entity, or a third entity and corresponding entities as described before, and where a majority of the data of a data record is transmitted from the first entity to the third entity directly, and a minority of the data of the data record is processed by the first entity for reception by the second entity, is received by the second entity and is transmitted from the second entity to the server.

Preferably, the data record is a compressed and/or encrypted data record.

Furthermore, the invention relates to a communication system comprising at least two or three entities or more entities as discussed before.

Depending on certain implementation requirements, examples of the invention such as the first entity, the second entity of the third entity can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed.

Some examples according to the invention comprise a data carrier having electronically readable control signals, which are capable of cooperating with a programmable computer system, such that one of the methods described herein is performed.

Generally, examples of the present invention can be implemented as a computer program product with a program code, the program code being operative for performing one of the methods when the computer program product runs on a computer. The program code may for example be stored on a machine readable carrier.

Other examples comprise the computer program for performing one of the methods described herein, stored on a machine readable carrier.

In other words, an example of the inventive method is, therefore, a computer program having a program code for performing one of the methods described herein, when the computer program runs on a computer.

A further example of the inventive methods is, therefore, a data carrier (or a digital storage medium, or a computer-readable medium) comprising, recorded thereon, the computer program for performing one of the methods described herein.

A further example of the inventive method is, therefore, a data stream or a sequence of signals representing the computer program for performing one of the methods described herein. The data stream or the sequence of signals may for example be configured to be transferred via a data communication connection, for example via the Internet.

A further example comprises a processing means, for example a computer, or a programmable logic device, configured to or adapted to perform one of the methods described herein.

A further example comprises a computer having installed thereon the computer program for performing one of the methods described herein.

In some examples a programmable logic device (for example a field programmable gate array) may be used to perform some or all of the functionalities of the methods described herein. In some examples a field programmable gate array may cooperate with a microprocessor in order to perform one of the methods described herein. Generally, the methods are preferably performed by any hardware apparatus.

The above described examples are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the examples herein.

## Claims

1. First entity (11) for communicating with a second entity (12) and a third entity (13), comprising:
a data subdivider (180) for subdividing a data entity into at least a first data portion and a second data portion (162, 163);
an output interface (181) for transmitting a first message (165) to the third entity, the first message comprising the first data portion (162) and not comprising the second data portion (163), and for outputting a second message (166) for reception by the second entity (12), the second message comprising the second data portion (163), wherein the second message does not comprise the first data portion (162), wherein the output interface (181) is configured for transmitting the first message (165) via a first transmission channel, for transmitting the second message (166) via a second transmission channel, wherein the transmission capacity of the second transmission channel is lower than the transmission capacity of the first transmission channel,
wherein the data subdivider (180) is configured for subdividing the data entity such that a data amount in the first data portion is higher than a data amount in the second data portion, and
wherein the data subdivider (180) is configured for subdividing the data entity in a manner known to the third entity, or wherein the data subdivider (180) is configured for generating subdivision information (184) indicating the way of subdividing the data entity and the first message (165) or the second message (166) comprises the subdivision information or wherein the output interface (181) is configured for transmitting a further message comprising the subdivision information to the third entity (13).

2. First entity in accordance with claim 1, in which the data entity is a data file or a key.

3. First entity in accordance with any one of claims 1 to 2, in which the output interface (181) is configured for displaying the second message as a two-dimensional optical code on a display.

4. First entity in accordance with one of the preceding claims, in which the data entity is a key,
in which the first entity comprises an encrypter for encrypting (160) a data message using the key to obtain an encrypted message, and
in which the output interface (181) is configured for generating the first message using the encrypted message and only a first portion of the key as the first data portion or for generating the second message using the encrypted message and only a second portion of the key as the second data portion, wherein the second portion of the key is different from the first portion of the key.

5. First entity in accordance with claim 1, in which the data entity is a key, wherein the first entity further comprises an encrypter (160), wherein the encrypter (160) is configured for encrypting one key portion using the other key portion.

6. The first entity in accordance with one of the preceding claims, in which the data subdivider (180) is configured for subdividing the data entity such that the first data portion has ten times or more the data amount of the second data portion.

7. First entity in accordance with claim 1 or 2, further comprising an encrypter (160) for encrypting a data file using an encryption information allowing a decryption at the third entity and not allowing a decryption at the second entity to obtain an encrypted data file, the encrypted data file being the data entity.

8. First entity in accordance with one of the preceding claims, in which the data subdivider (180) is configured for scrambling or encrypting bytes of the data entity selected for the second data portion using scrambling or encrypting information allowing a descrambling or decryption in the third entity and not allowing a descrambling or decryption in the second entity.

9. First entity in accordance with one of the preceding claims, further comprising a key generator (167) for locally generating a key as the data entity.

10. First entity in accordance with one of the preceding claims, in which the data entity comprises an encrypted or non encrypted data file, in which the data subdivider (180) is configured for subdividing the data entity into at least three data portions, wherein the output interface is configured for transmitting the first message comprising the first portion to the third entity, to output the second message comprising the second data portion to the second entity, and to output a third message comprising the third data portion and not comprising the second portion and the first portion to a fourth entity.

11. Method of communicating with a second entity (12) and a third entity (13) by a first entity (11), comprising:
subdividing (180) a data entity into at least a first data portion and a second data portion (162, 163);
transmitting (181) a first message (165) to the third entity, the first message comprising the first data portion (162) and not comprising the second data portion (163), and outputting a second message (166) for reception by the second entity (12), the second message comprising the second data portion (163), wherein the second message does not comprise the first data portion (162),
wherein the first message (165) is transmitted via a first transmission channel, wherein the second message (166) is transmitted via a second transmission channel, wherein the transmission capacity of the second transmission channel is lower than the transmission capacity of the first transmission channel,
wherein the subdividing (180) is performed such that a data amount in the first data portion is higher than a data amount in the second data portion, and
wherein the subdividing the data entity is performed in a manner known to the third entity, or wherein subdivision information (184) indicating the way of subdividing the data entity is generated, and the first message (165) or the second message (166) is provided with the subdivision information or wherein a further message comprising the subdivision information is transmitted.

12. Computer program having a program code for performing, when running on a computer, a method in accordance with claim 11.

## Patentansprüche

1. Erste Entität (11) zum Kommunizieren mit einer zweiten Entität (12) und einer dritten Entität (13), die folgende Merkmale aufweist:
einen Datenunterteiler (180) zum Unterteilen einer Datenentität in zumindest einen ersten Datenabschnitt und einen zweiten Datenabschnitt (162, 163);
eine Ausgangsschnittstelle (181) zum Übertragen einer ersten Nachricht (165) an die dritte Entität, wobei die erste Nachricht den ersten Datenabschnitt (162) aufweist und den zweiten Datenabschnitt (163) nicht aufweist, und zum Ausgeben einer zweiten Nachricht (166) zum Empfang durch die zweite Entität (12), wobei die zweite Nachricht den zweiten Datenabschnitt (163) aufweist, wobei die zweite Nachricht den ersten Datenabschnitt (162) nicht aufweist, wobei die Ausgangsschnittstelle (181) zum Übertragen der ersten Nachricht (165) über einen ersten Übertragungskanal, zum Übertragen der zweiten Nachricht (166) über einen zweiten Übertragungskanal ausgebildet ist, wobei die Übertragungskapazität des zweiten Übertragungskanals niedriger ist als die Übertragungskapazität des ersten Übertragungskanals,
wobei der Datenunterteiler (180) zum derartigen Unterteilen der Datenentität ausgebildet ist, dass eine Datenmenge in dem ersten Datenabschnitt größer ist als eine Datenmenge in dem zweiten Datenabschnitt, und
wobei der Datenunterteiler (180) zum Unterteilen der Datenentität in einer Weise, die der dritten Entität bekannt ist, ausgebildet ist, oder wobei der Datenunterteiler (180) zum Erzeugen von Unterteilungsinformationen (184), die die Weise eines Unterteilens der Datenentität anzeigen, ausgebildet ist und die erste Nachricht (165) oder die zweite Nachricht (166) die Unterteilungsinformationen aufweist, oder wobei die Ausgangsschnittstelle (181) zum Übertragen einer weiteren Nachricht, die die Unterteilungsinformationen aufweist, an die dritte Entität (13) ausgebildet ist.

2. Erste Entität gemäß Anspruch 1, bei der die Datenentität eine Datendatei oder ein Schlüssel ist.

3. Erste Entität gemäß einem der Ansprüche 1 bis 2, bei der die Ausgangsschnittstelle (181) zum Anzeigen der zweiten Nachricht als zweidimensionalen optischen Code auf einer Anzeige ausgebildet ist.

4. Erste Entität gemäß einem der vorherigen Ansprüche, bei der die Datenentität ein Schlüssel ist,
wobei die erste Entität eine Verschlüsselungsvorrichtung zum Verschlüsseln (160) einer Datennachricht unter Verwendung des Schlüssels aufweist, um eine verschlüsselte Nachricht zu erhalten, und
wobei die Ausgangsschnittstelle (181) zum Erzeugen der ersten Nachricht unter Verwendung der verschlüsselten Nachricht und nur eines ersten Abschnitts des Schlüssels als erster Datenabschnitt oder zum Erzeugen der zweiten Nachricht unter Verwendung der verschlüsselten Nachricht und nur eines zweiten Abschnitts des Schlüssels als zweiter Datenabschnitt ausgebildet ist, wobei sich der zweite Abschnitt des Schlüssels von dem ersten Abschnitt des Schlüssels unterscheidet.

5. Erste Entität gemäß Anspruch 1, bei der die Datenentität ein Schlüssel ist, wobei die erste Entität ferner eine Verschlüsselungsvorrichtung (160) aufweist, wobei die Verschlüsselungsvorrichtung (160) zum Verschlüsseln eines Schlüsselabschnitts unter Verwendung des anderen Schlüsselabschnitts ausgebildet ist.

6. Die erste Entität gemäß einem der vorherigen Ansprüche, bei der der Datenunterteiler (180) zum derartigen Unterteilen der Datenentität ausgebildet ist, dass der erste Datenabschnitt zehnmal oder mehr die Datenmenge des zweiten Datenabschnitts aufweist.

7. Erste Entität gemäß Anspruch 1 oder 2, die ferner eine Verschlüsselungsvorrichtung (160) zum Verschlüsseln einer Datendatei unter Verwendung einer Verschlüsselungsinformation, die eine Entschlüsselung an der dritten Entität erlaubt und eine Entschlüsselung an der zweiten Entität nicht erlaubt, aufweist, um eine verschlüsselte Datendatei zu erhalten, wobei die verschlüsselte Datendatei die Datenentität ist.

8. Erste Entität gemäß einem der vorherigen Ansprüche, bei der der Datenunterteiler (180) zum Verwürfeln oder Verschlüsseln von Bytes der Datenentität, die für den zweiten Datenabschnitt ausgewählt sind, unter Verwendung von Verwürfelungs- oder Verschlüsselungsinformationen ausgebildet ist, die eine Entwürfelung oder Entschlüsselung in der dritten Entität erlauben und eine Entwürfelung oder Entschlüsselung in der zweiten Entität nicht erlauben.

9. Erste Entität gemäß einem der vorherigen Ansprüche, die ferner einen Schlüsselerzeuger (167) zum lokalen Erzeugen eines Schlüssels als Datenentität aufweist.

10. Erste Entität gemäß einem der vorherigen Ansprüche, bei der die Datenentität eine verschlüsselte oder nicht verschlüsselte Datendatei aufweist,
bei der der Datenunterteiler (180) zum Unterteilen der Datenentität in zumindest drei Datenabschnitte ausgebildet ist, wobei die Ausgangsschnittstelle zum Übertragen der ersten Nachricht, die den ersten Abschnitt aufweist, an die dritte Entität ausgebildet ist, um die zweite Nachricht, die den zweiten Datenabschnitt aufweist, an die zweite Entität auszugeben, und um eine dritte Nachricht, die den dritten Datenabschnitt aufweist und den zweiten Abschnitt und den ersten Abschnitt nicht aufweist, an eine vierte Entität auszugeben.

11. Verfahren zum Kommunizieren mit einer zweiten Entität (12) und einer dritten Entität (13) durch eine erste Entität (11), das folgende Schritte aufweist:
Unterteilen (180) einer Datenentität in zumindest einen ersten Datenabschnitt und einen zweiten Datenabschnitt (162, 163);
Übertragen (181) einer ersten Nachricht (165) an die dritte Entität, wobei die erste Nachricht den ersten Datenabschnitt (162) aufweist und den zweiten Datenabschnitt (163) nicht aufweist, und Ausgeben einer zweiten Nachricht (166) zum Empfang durch die zweite Entität (12), wobei die zweite Nachricht den zweiten Datenabschnitt (163) aufweist, wobei die zweite Nachricht den ersten Datenabschnitt (162) nicht aufweist,
wobei die erste Nachricht (165) über einen ersten Übertragungskanal übertragen wird, wobei die zweite Nachricht (166) über einen zweiten Übertragungskanal übertragen wird, wobei die Übertragungskapazität des zweiten Übertragungskanals niedriger ist als die Übertragungskapazität des ersten Übertragungskanals,
wobei das Unterteilen (180) derart durchgeführt wird, dass eine Datenmenge in dem ersten Datenabschnitt größer ist als eine Datenmenge in dem zweiten Datenabschnitt, und
wobei das Unterteilen der Datenentität in einer Weise, die der dritten Entität bekannt ist, durchgeführt wird, oder wobei Unterteilungsinformationen (184), die die Weise eines Unterteilens der Datenentität anzeigen, erzeugt werden und die erste Nachricht (165) oder die zweite Nachricht (166) mit den Unterteilungsinformationen versehen ist, oder wobei eine weitere Nachricht, die die Unterteilungsinformationen aufweist, übertragen wird.

12. Computerprogramm mit einem Programmcode zum Durchführen eines Verfahrens gemäß Anspruch 11, wenn dasselbe auf einem Computer abläuft.

## Revendications

1. Première entité (11) pour communiquer avec une deuxième entité (12) et une troisième entité (13), comprenant:
un subdiviseur de données (180) destiné à subdiviser une entité de données en au moins une première partie de données et une deuxième partie de données (162, 163);
une interface de sortie (181) destinée à transmettre un premier message (165) à la troisième entité, le premier message comprenant la première partie de données (162) et ne comprenant pas la deuxième partie de données (163), et à sortir un deuxième message (166) pour réception par la deuxième entité (12), le deuxième message comprenant la deuxième partie de données (163), où le deuxième message ne comprend pas la première partie de données (162), où l'interface de sortie (181) est configurée pour transmettre le premier message (165) via un premier canal de transmission, pour transmettre le deuxième message (166) via un deuxième canal de transmission, où la capacité de transmission du deuxième canal de transmission est inférieure à la capacité de transmission du premier canal de transmission,
dans laquelle le subdiviseur de données (180) est configuré pour subdiviser l'entité de données de sorte qu'une quantité de données dans la première partie de données soit supérieure à une quantité de données dans la deuxième partie de données, et
dans laquelle le subdiviseur de données (180) est configuré pour subdiviser l'entité de données de manière connue de la troisième entité, ou dans laquelle le subdiviseur de données (180) est configuré pour générer des informations de subdivision (184) indiquant le mode de subdivision de l'entité de données et le premier message (165) ou le deuxième message (166) comprend les informations de subdivision ou dans laquelle l'interface de sortie (181) est configurée pour transmettre un autre message comprenant les informations de subdivision à la troisième entité (13).

2. Première entité selon la revendication 1, dans laquelle l'entité de données est un fichier de données ou une clef.

3. Première entité selon l'une quelconque des revendications 1 à 2, dans laquelle l'interface de sortie (181) est configurée pour afficher le deuxième message sous forme de code optique bidimensionnel sur un écran.

4. Première entité selon l'une quelconque des revendications précédentes, dans laquelle l'entité de données est une clef,
dans laquelle la première entité comprend un crypteur destiné à crypter (160) un message de données à l'aide de la clef, pour obtenir un message crypté, et
dans laquelle l'interface de sortie (181) est configurée pour générer le premier message à l'aide du message crypté et uniquement une première partie de la clef comme première partie de données ou pour générer le deuxième message à l'aide du message crypté et uniquement une deuxième partie de la clef comme deuxième partie de données, dans laquelle la deuxième partie de la clef est différente de la première partie de la clef.

5. Première entité selon la revendication 1, dans laquelle l'entité de données est une clef, dans laquelle la première entité comprend par ailleurs un crypteur (160), dans laquelle le crypteur (160) est configuré pour crypter une partie de clef à l'aide de l'autre partie de clef.

6. Première entité selon l'une des revendications précédentes, dans laquelle le subdiviseur de données (180) est configuré pour subdiviser l'entité de données de sorte que la première partie de données présente dix fois ou plus la quantité de données de la deuxième partie de données.

7. Première entité selon la revendication 1 ou 2, comprenant par ailleurs un crypteur (160) destiné à crypter un fichier de données à l'aide d'une information de cryptage permettant un décryptage à la troisième entité et ne permettant pas de décryptage à la deuxième entité, pour obtenir un fichier de données crypté, le fichier de données crypté étant l'entité de données.

8. Première entité selon l'une des revendications précédentes, dans laquelle le subdiviseur de données (180) est configuré pour brouiller ou crypter des octets de l'entité de données sélectionnée pour la deuxième partie de données à l'aide des informations de brouillage ou de cryptage permettant un débrouillage ou décryptage dans le troisième entité et ne permettant pas de débrouillage ou décryptage dans la deuxième entité.

9. Première entité selon l'une quelconque des revendications précédentes, comprenant par ailleurs un générateur de clef (167) destiné à générer localement une clef comme entité de données.

10. Première entité selon l'une quelconque des revendications précédentes, dans laquelle l'entité de données comprend un fichier de données crypté ou non crypté,
dans laquelle le subdiviseur de données (180) est configuré pour subdiviser l'entité de données en au moins trois parties de données, dans laquelle l'interface de sortie est configurée pour transmettre le premier message comprenant la première partie à la troisième entité, pour sortir le deuxième message comprenant la deuxième partie de données à la deuxième entité, et pour sortir un troisième message comprenant la troisième partie de données et ne comprenant pas la deuxième partie et la première partie vers une quatrième entité.

11. Procédé pour communiquer avec une deuxième entité (12) et une troisième entité (13) par une première entité (11), comprenant le fait de:
subdiviser (180) une entité de données en au moins une première partie de données et une deuxième partie de données (162, 163);
transmettre (181) un premier message (165) à la troisième entité, le premier message comprenant la première partie de données (162) et ne comprenant pas la deuxième partie de données (163), et sortir un deuxième message (166) pour réception par la deuxième entité (12), le deuxième message comprenant la deuxième partie de données (163), dans laquelle le deuxième message ne comprend pas la première partie de données (162),
dans lequel le premier message (165) est transmis via un premier canal de transmission, dans lequel le deuxième message (166) est transmis via un deuxième canal de transmission, dans lequel la capacité de transmission du deuxième canal de transmission est inférieure à la capacité de transmission du premier canal de transmission,
dans lequel la subdivision (180) est réalisée de sorte qu'une quantité de données dans la première partie de données soit supérieure à une quantité de données dans la deuxième partie de données, et
dans lequel la subdivision de l'entité de données est effectuée de manière connue par la troisième entité, ou dans lequel sont générées des informations de subdivision (184) indiquant le mode de subdivision de l'entité de données, et le premier message (165) ou le deuxième message (166) est fourni avec les informations de subdivision, ou dans lequel est transmis un autre message comprenant les informations de subdivision.

12. Programme d'ordinateur présentant un code de programme pour réaliser, lorsqu'il est exécuté sur un ordinateur, un procédé selon la revendication 11.
